# EUROPÄISCHE PATENTSCHRIFT

(11) **EP 3 097 319 B1**
(45) Veröffentlichungstag und Bekanntmachung des Hinweises auf die Patenterteilung: **14.03.2018**
(21) Anmeldenummer: 15700577.8
(22) Anmeldetag: 16.01.2015
(51) Int. Cl.: F16D 55/2255, F16D 66/02

(54) **SENSORVORRICHTUNG UND SCHEIBENBREMSE MIT EINER SENSORVORRICHTUNG**
SENSOR DEVICE AND DISK BRAKE HAVING A SENSOR DEVICE
DISPOSITIF À CAPTEUR ET FREIN À DISQUE ÉQUIPÉ D'UN DISPOSITIF À CAPTEUR

(30) Priorität: 20.01.2014 DE 102014100562
(43) Veröffentlichungstag der Anmeldung: 30.11.2016
(73) Patentinhaber: KNORR-BREMSE Systeme für Nutzfahrzeuge GmbH, 80809 München (DE)
(72) Erfinder: STAAHL, Christian, 81929 München (DE); BLESSING, Michael, 80687 München (DE)
(86) Internationale Anmeldenummer: PCT/EP2015/050735
(87) Internationale Veröffentlichungsnummer: WO 2015/107135

(56) Entgegenhaltungen:
- DE-A1- 4 212 387
- DE-A1-102012 102 582
- DE-T2- 69 721 488

## Beschreibung

Die Erfindung betrifft eine Sensorvorrichtung für eine Scheibenbremse, insbesondere für ein Kraftfahrzeug, nach dem Oberbegriff des Anspruchs 1. Die Erfindung bezieht sich auch auf eine Scheibenbremse mit einer solchen Sensorvorrichtung.

Derartige Sensorvorrichtungen werden zur Erfassung eines Verschleißzustands von Bremsbelägen und Bremsscheibe einer Scheibenbremse eingesetzt. Es sind viele unterschiedliche Arten bekannt. Das Dokument DE 4212387 B4 sei zur Illustration eines Beispiels genannt. Es beschreibt einen Belagverschleißdetektor für eine druckluftbetätigte Scheibenbremse.

Die Sensorvorrichtung kann mit einem Überwachungssystem verbunden sein, welches den Belagverschleißzustand und den Betätigungshub der Bremse erfassen kann.

Solche Scheibenbremsen sind üblicherweise druckluftbetätigt und mit automatisch wirkenden, mechanischen Verschleißnachstellvorrichtungen ausgestattet. Diese Verschleißnachstellvorrichtungen wirken sehr zuverlässig und verkleinern ein zu groß gewordene Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Verschleißnachstellvorrichtung z.B. durch eine Verstellbewegung von positionsveränderlichen Gewindespindeln.

Ein Beispiel einer Nachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Gewindespindel weitergeleitet. Aufgrund der ständig wachsenden Anforderungen, Teilezahlen und somit Kosten zu reduzieren, wobei gleichzeitig Qualität und Nutzen nicht nur beibehalten sondern erhöht werden sollen und außerdem eine erhöhte Genauigkeit trotz unterschiedlicher und größerer Toleranzen bei unterschiedlichen Einsatzbedingungen gefordert ist, ergibt sich ein dementsprechender Bedarf für eine verbesserte Sensorvorrichtung.

Die Aufgabe der vorliegenden Erfindung besteht darin, eine verbesserte Sensorvorrichtung zu schaffen. Eine weitere Aufgabe ist es, eine verbesserte Scheibenbremse bereitzustellen.

Die Aufgabe wird durch eine Sensorvorrichtung mit den Merkmalen des Anspruchs 1 gelöst.

Die Aufgabe wird auch durch eine Scheibenbremse mit den Merkmalen des Anspruchs 24 gelöst.

Es wird eine Sensorvorrichtung zur Erfassung eines Verschleißes von Bremsbelägen und Bremsscheibe einer Scheibenbremse geschaffen, wobei eine Übertragungseinheit mit einer Antriebshülse, einer Abtriebshülse, einem Federelement und einem Mitnehmer vorgesehen ist. Die Übertragungseinheit bietet eine Übertragung der für den Verschleiß zu erfassenden Größe auf eine Sensoreinrichtung mit einer gegenüber dem Stand der Technik erhöhten Genauigkeit.

Eine erfindungsgemäße Sensorvorrichtung zur Erfassung eines Verschleißes von Bremsbelägen und Bremsscheibe einer Scheibenbremse, insbesondere für ein Kraftfahrzeug, umfasst eine Sensoreinrichtung und eine Übertragungseinheit, wobei die Sensoreinrichtung mindestens einen Geber und ein mit dem mindestens einen Geber gekoppeltes Sensorgetriebe mit mindestens einem Getriebeeingang aufweist, wobei die Übertragungseinheit mit dem Getriebeeingang gekoppelt ist und zur Übertragung einer Drehbewegung, die dem zu erfassenden Verschleiß zugeordnet ist, für eine Kopplung mit einer Gewindespindel der zuzuordnenden Scheibenbremse ausgebildet ist. Die Übertragungseinheit umfasst eine Antriebshülse zur drehfesten Kopplung mit der Gewindespindel, eine mit der Antriebshülse gekoppelte Abtriebshülse, mindestens ein Federelement und einen mit der Abtriebshülse drehfest gekoppelten Mitnehmer zur drehfesten Kopplung mit dem Getriebeeingang.

Eine erfindungsgemäße Scheibenbremse, insbesondere für ein Kraftfahrzeug, mit mindestens zwei Spindeleinheiten mit jeweils einer Gewindespindel, einer Zuspannvorrichtung mit einer Spreizmechanik, vorzugsweise mit einem Bremsdrehhebel, die mit einer Brücke zusammenwirkt, in welcher die Gewindespindeln eingeschraubt sind, einer Verschleißnachstellvorrichtung, welche mindestens eine mechanische Nachstelleinrichtung aufweist, die vorzugsweise um eine Gewindespindel herum mit dieser gekoppelt angeordnet und mit der Spreizmechanik, vorzugsweise mit dem Bremsdrehhebel, gekoppelt ist, mit einer Synchroneinheit, die Synchronräder und ein die Synchronräder koppelndes Synchronmittel aufweist, wobei jede Gewindespindel mit jeweils einem der Synchronräder drehfest gekoppelt ist, ist mit der erfindungsgemäßen Sensorvorrichtung ausgerüstet. Dabei ist das Ende der Antriebshülse der Übertragungseinheit mit der Gewindespindel über das mit der Gewindespindel drehfest gekoppelte Synchronrad direkt oder indirekt über ein oder mehrere Zwischenbauteile drehfest verbunden.

Die drehfeste Kopplung der Antriebshülse mit der Gewindespindel kann direkt ausgebildet sein. Die Kopplung kann aber auch indirekt über ein oder mehrere Zwischenbauteile ausgebildet sein.

Die Antriebshülse der Übertragungseinheit ist dabei über die Gewindespindel geschoben und mit dem Synchronrad verbunden. Die Drehbewegung der Gewindespindel wird auf die Antriebshülse, von dieser mittelbar oder unmittelbar auf die Abtriebshülse und von dieser über den Mitnehmer auf die Sensoreinrichtung spielfrei übertragen. Die Übertragungseinheit bietet den Vorteil, dass sie verschiedene Bewegungen der Gewindespindel(n) und ein Kippen der Brücke bei Betätigung der Bremse auf einfache Weise ausgleichen.

In einer Ausführung ist vorgesehen, dass die Abtriebshülse auf der Antriebshülse mit dieser drehfest gekoppelt und relativ zu der Antriebshülse axial verschiebbar angeordnet ist. So kann die Verdrehung der Antriebshülse bewirkt durch die Verdrehung der Spindel auf die Abtriebshülse übertragen werden, wobei gleichzeitig eine axiale Verschiebung der Abtriebshülse zur Antriebshülse möglich ist.

In einer weiteren Ausführung weist die Antriebshülse einen hohlzylindrischen Körper auf, auf dessen Außenfläche ein Außenprofil als eine Verzahnung einer Wellen-Naben-Verbindung zum Eingriff mit einem mit dem Außenprofil korrespondierenden Innenprofil der Abtriebshülse angeordnet ist. Das Außenprofil der Antriebshülse und das Innenprofil der Abtriebshülse können z.B. als eine Kerbverzahnung, Zahnwellenverzahnung, Keilwellenverzahnung, oder ein Polygonprofil ausgebildet sein. Diese Profile sind übliche Wellen-Naben-Verbindungen und weisen geringes Spiel auf.

Es ist weiterhin vorgesehen, dass ein Endabschnitt der Antriebshülse einen Antriebsabschnitt mit einem Antriebsprofil zur direkten Kopplung oder zur indirekten Kopplung über ein oder mehrere Zwischenbauteile mit der Gewindespindel versehen ist, wobei das Antriebsprofil als eine Verzahnung einer Wellen-Naben-Verbindung ausgebildet und an dem zugehörigen Ende des Endabschnitts von einem Flansch begrenzt ist. Auch dieses Antriebsprofil ist ein Außenprofil und kann beispielsweise auch als eine Kerbverzahnung, Zahnwellenverzahnung, Keilwellenverzahnung, oder ein Polygonprofil ausgebildet sein. Der Flansch bietet den Vorteil, dass über ihn eine axiale Festlegung der Antriebshülse z.B. in einer Innennut ermöglicht wird.

In einer anderen Ausführung ist der Antriebsabschnitt über einen Absatz mit dem Körper der Antriebshülse verbunden und weist einen größeren Außendurchmesser als der Köper auf. Damit lässt sich ein einfacher Zusammenbau ermöglichen.

In noch einer anderen Ausführung ist das mindestens eine Federelement zwischen dem Absatz der Antriebshülse und einem Rand der Abtriebshülse angeordnet.

Alternativ oder auch zusätzlich kann das mindestens eine Federelement zwischen einer Stirnseite der Antriebshülse und einem Boden der Abtriebshülse angeordnet sein.

So ist es vorteilhaft einfach möglich, dass auf die Abtriebshülse immer eine Vorspannkraft wirkt, welche die Abtriebshülse mit dem Mitnehmer immer in den Getriebeeingang der Sensoreinrichtung drückt. Das mindestens eine Federelement kann z.B. als Druckfeder ausgebildet sein. Auch Kombinationen unterschiedlicher oder mehrerer Federelemente sind möglich.

Eine weitere Ausführung sieht vor, dass ein der Antriebshülse abgewandtes Ende der Abtriebshülse mit einem Boden verschlossen ist, welcher eine Öffnung mit einem Öffnungsprofil aufweist. Auch dieses Öffnungsprofil kann eine Wellen-Naben-Verbindung, z.B. eine Kerbverzahnung, sein. So ist eine einfache Kopplung mit dem Mitnehmer möglich.

In einer weiteren Ausführung umfasst der Mitnehmer einen Körper, der mit einem Eingangsabschnitt und einem Ausgangsabschnitt verbunden ist, wobei der Eingangsabschnitt zur Kopplung mit dem Öffnungsprofil der Abtriebshülse ein Außenprofil aufweist, das mit dem Öffnungsprofil korrespondiert, und wobei der Ausgangsabschnitt zur Kopplung mit dem Getriebeeingang der Sensoreinrichtung ein Außenprofil aufweist, das mit einem Innenprofil des Getriebeeingangs korrespondiert. Der Mitnehmer ist so auf einfache Weise beim Zusammenbau der Übertragungseinheit mit der Abtriebshülse und dem Getriebeeingang zusammensteckbar. Außerdem kann der Mitnehmer in einer besonderen Ausgestaltung seines Körpers eine Desachsierung zwischen einer Sensorachse des Getriebeeingangs, der wie die Sensoreinrichtung mit ihrem Gehäuse ortsfest im Bremssattel angeordnet ist, und einer Mittelachse der Abtriebshülse ausgleichen. Die Funktionalität der Desachsierung kann auch in der Abtriebshülse oder/und im Sensorgetriebe integriert sein.

In einer anderen Ausführung ist die Antriebshülse mit mindestens einem sich axial erstreckenden Schlitz ausgehend von dem Ende, das zur Kopplung mit der Gewindespindel vorgesehen ist, versehen, der als eine Ausnehmung in den Körper der Antriebshülse eingeformt ist.

Alternativ kann die Antriebshülse mit mindestens zwei sich axial erstreckenden Schlitzen ausgehend von dem Ende, das zur Kopplung mit der Gewindespindel vorgesehen ist, versehen sein, die als Ausnehmungen in den Körper der Antriebshülse eingeformt sind und zwischen sich zwei Halteabschnitte bilden.

Auf diese Weise ist es vorteilhaft ermöglicht, dass der Endbereich der Antriebshülse, der für eine direkte oder indirekte Kopplung mit der Gewindespindel vorgesehen ist, einfach zusammengepresst werden kann, um beim Einbau die Kopplung herzustellen.

Dabei ist es vorteilhaft, wenn die Antriebshülse und die Abtriebshülse aus einem elastischen und duktilen Material hergestellt sind. Die Hülsen der Übertragungseinheit können dann wie eine Kardanverbindung zwischen der Verdrehungseinleitung in die Antriebshülse und dem Getriebeeingang wirken.

Es ist vorgesehen, dass das Synchronrad der Scheibenbremse einen ringförmigen Übertragungsabschnitt mit einem an seiner Innenwand angeordneten Abtriebsprofil aufweist, welches mit dem Antriebsprofil des Endes der Antriebshülse der Übertragungseinheit korrespondiert und in Eingriff steht. Auf diese Weise ist eine indirekte Kopplung der Antriebshülse über das mit der Getriebespindel drehfest verbundene Synchronrad möglich. Die Gewindespindel benötigt so keine Veränderung, lediglich das Synchronrad wird für diese Kopplung mit der Übertragungseinheit angepasst.

Das Abtriebsprofil des Synchronrads und das Antriebsprofil der Antriebshülse können als eine Kerbverzahnung, Zahnwellenverzahnung, Keilwellenverzahnung, oder Polygonprofil ausgebildet sein.

In einer Ausführung ist in dem Übertragungsabschnitt an dessen belagseitigen inneren Ende hinter dem Abtriebsprofil eine Innennut zur Aufnahme des Flansches der Antriebshülse der Übertragungseinheit eingeformt, wobei ein Innendurchmesser der Innennut größer ist als ein Innendurchmesser des Übertragungsabschnitts. Der zusammengedrückte Endbereich mit dem Flansch kann so auf einfache Weise in den Übertragungsabschnitt des Synchronrads eingeführt werden, wobei bei Loslassen der Flansch in der Innennut aufgenommen wird und eine axiale Festlegung der Antriebshülse im Synchronrad bildet. Gleichzeitig kommen das Abtriebsprofil des Synchronrads und das Antriebsprofil der Antriebshülse in Eingriff, wodurch die Antriebshülse über das Synchronrad mit der Gewindespindel gekoppelt ist.

In einer weiteren Ausführung ist vorgesehen, dass die Innennut eine größere axiale Länge als der Flansch der Antriebshülse aufweist. Hiermit ist es möglich, dass ein Winkel zwischen der Mittelachse der Antriebshülse und der Mittelachse des Synchronrads und der Gewindespindel dargestellt bzw. ausgeglichen werden.

In einer alternativen Ausführung der Sensorvorrichtung ist vorgesehen, dass die Abtriebshülse mit der Antriebshülse mittels des Federelementes drehsteif gekoppelt und mittels des Federelementes relativ zu der Antriebshülse axial bewergbar angeordnet ist. Dadurch ergibt sich ein einfacher Aufbau.

In einer Ausführung sind die Abtriebshülse und die Antriebshülse mittels des Federelementes untereinander unter einer axialen Vorspannung einbaubar. Somit kann das Federelement für zwei Funktionen verwendet werden.

In einer anderen Ausführung umfasst das Federelement Federarme und Federarmverbinder und ist über Federarmhalter an jedem Ende des Federelementes jeweils mit der Antriebshülse und der Abtriebshülse verbunden. Dies ermöglicht eine einfache Verbindung.

In einer noch anderen Ausführung ist vorgesehen, dass die Federarme, Federarmverbinder und Federarmhalter des Federelementes Ringe um eine Mittelachse des Federelementes bilden, wobei die Ringe zueinander in einem Abstand in Längsrichtung des Federelementes angeordnet sind. Außerdem verbinden die Federarmverbinder und Federarmhalter die Federarme der Ringe entlang des Umfangs, d.h. tangential, untereinander und die Ringe axial. Damit ist nicht nur ein drehsteifer Aufbau, sondern ein axial bewegbarer und vorspannbarer Aufbau möglich.

Es ist vorteilhaft, wenn der Mitnehmer mit der Abtriebshülse mit einem Verbindungsabschnitt aus einem nicht zusammengebauten Zustand in einen zusammengebauten Zustand verschwenkbar gekoppelt ist. So kann der Mitnehmer einerseits unverlierbar vorgesehen werden, und andererseits ist ein zwangsgeführter Zusammenbau möglich, wobei eine Fehlmontage ausgeschlossen wird.

Zudem ist es dabei vorteilhaft, dass Antriebshülse, die Abtriebshülse, das Federelement und der Mitnehmer einstückig hergestellt sind.

Es ergibt sich somit eine Übertragungseinheit, die vorteilhaft spielarm und drehsteif ist. Damit kann sie eine Verdrehung um ihre Längsachse übertragen und gleichzeitig einen Achsversatz, eine Winkelfehlstellung sowie einen Axialhub der zu verbindenden Bauteile ermöglichen. Außerdem ist eine axiale Vorspannung zwischen den zu verbindenden Bauteilen gewährleistet.

Die Scheibenbremse kann druckluftbetätigt sein.

Die Erfindung wird nun anhand beispielhafter Ausführungen mit Bezug auf die beigefügten Zeichnungen näher erläutert. Hierbei zeigen:
- Fig. 1: eine schematische Perspektivansicht eines Ausführungsbeispiels einer erfindungsgemäßen Scheibenbremse mit einer erfindungsgemäßen Sensorvorrichtung;
- Fig. 2: eine schematische Schnittansicht des Ausführungsbeispiels nach Fig. 1;
- Fig. 3: eine weitere schematische Perspektivansicht des Ausführungsbeispiels nach Fig. 1;
- Fig. 4-5: schematische Perspektivansichten des Ausführungsbeispiels nach Fig. 1 mit Explosionsdarstellungen einer Übertragungseinheit der Sensorvorrichtung;
- Fig. 6: eine schematische Perspektivansicht einer Antriebshülse;
- Fig. 7-7a: schematische Perspektivansichten einer Abtriebshülse;
- Fig. 8: eine vergrößerte schematische Schnittansicht des Bereiches VIII aus Fig. 3;
- Fig. 9-9c: perspektivische Ansichten einer Variante der Übertragungseinheit; und
- Fig. 9d-e: Querschnittansichten eines Federelementes der Variante nach Fig. 9-9c.

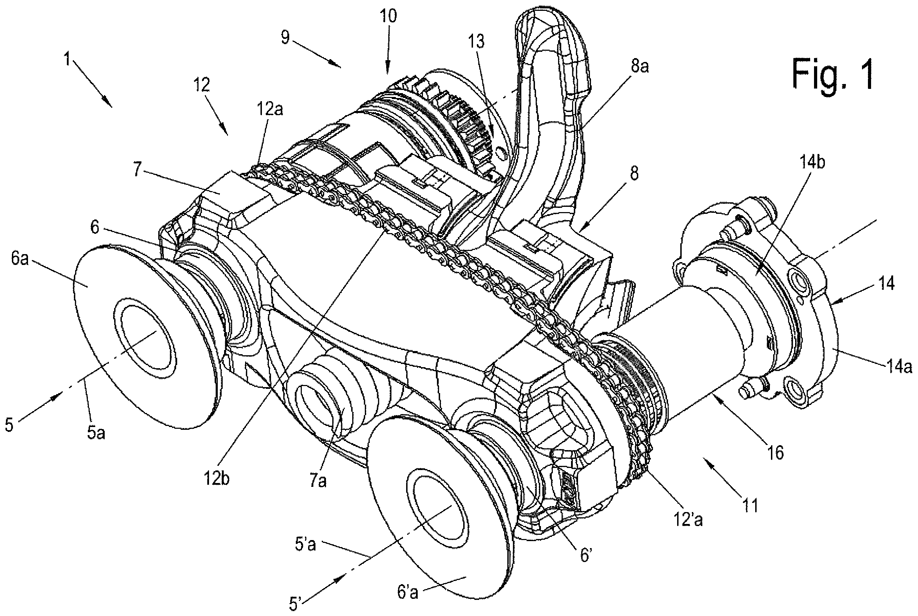

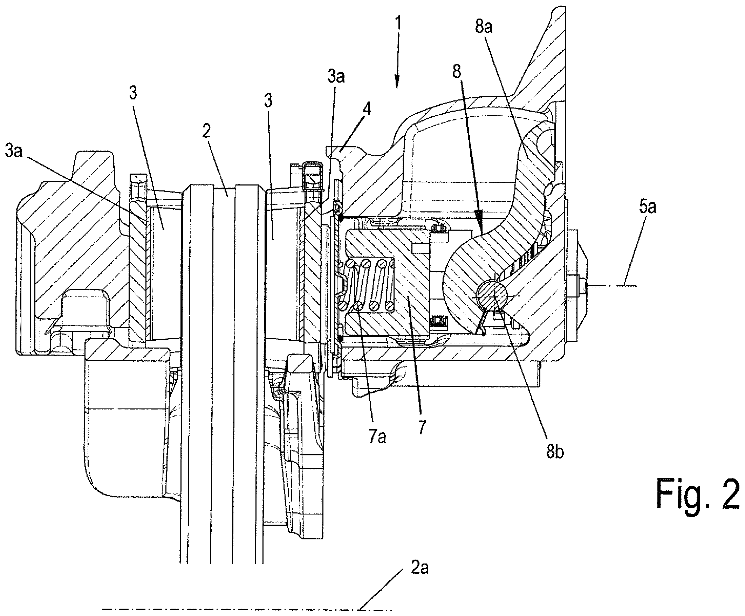

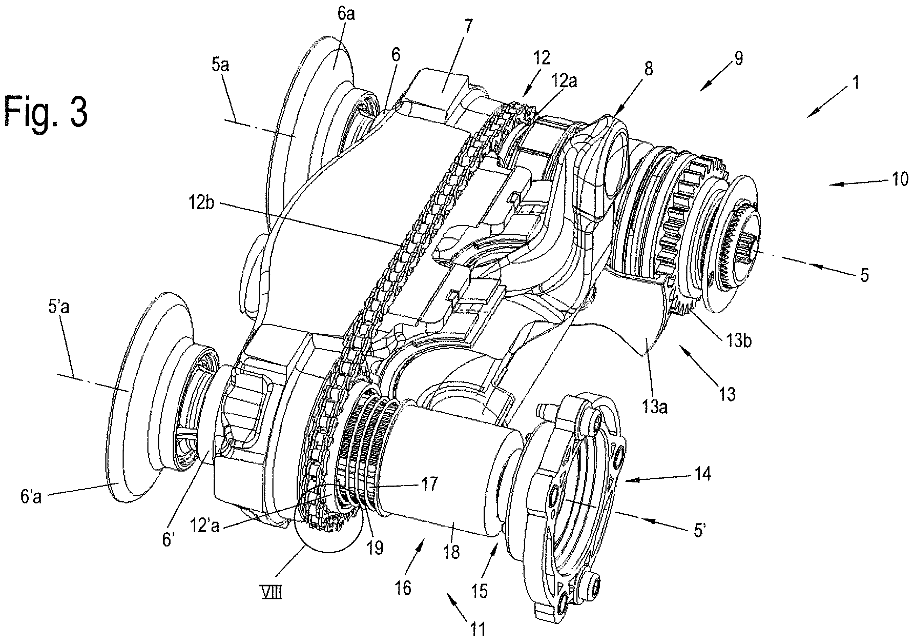

Fig. 1 zeigt eine schematische Perspektivansicht eines Ausführungsbeispiels einer erfindungsgemäßen Scheibenbremse 1 mit einer erfindungsgemäßen Sensorvorrichtung. In Fig. 2 ist eine schematische Schnittansicht des Ausführungsbeispiels nach Fig. 1 dargestellt. Fig. 3 zeigt eine weitere schematische Perspektivansicht des Ausführungsbeispiels nach Fig. 1 aus einem anderen Blickwinkel.

Die Scheibenbremse 1 ist hier als so genannte zweistempelige Bremse dargestellt. Sie weist einen Bremssattel 4 auf, welcher eine Bremsscheibe 2 übergreift. Die Bremsscheibe 2 ist um eine Bremscheibenachse 2a drehbar, wobei beidseitig der Bremsscheibe 2 jeweils ein Bremsbelag 3 auf einem Bremsbelagträger 3a angeordnet ist. Weiterhin ist die Scheibenbremse 1 mit einer Zuspannvorrichtung, die hier mit einem Bremsdrehhebel 8 ausgeführt ist, zur Zuspannung der Scheibenbremse 1 ausgebildet. Der Bremsdrehhebel 8 wird auch als Spreizmechanik bezeichnet, ist Teil der Zuspannvorrichtung und weist einen Hebelarm 8a auf, welcher z.B. von einem Druckluftbremszylinder betätigbar ist. Der Bremsdrehhebel 8 ist über eine nicht näher bezeichnete Lagerwalze am Bremssattel 4 um eine Hebelschwenkachse 8b verschwenkbar gelagert.

Die Perspektivansicht in Fig. 1 ist von der sogenannten Belagseite her gesehen, wohingegen die Perspektivansicht der Fig. 3 von der sogenannten Zuspannseite her gesehen ist.

Unter dem Begriff "belagseitig" ist die Seite zu verstehen, welche zu den Bremsbeläge 3 der Bremse weist. Mit dem Begriff "zuspannseitig" ist die entgegengesetzte Seite gemeint, welche zur Zuspannvorrichtung weist bzw. von der Belagseite weg weist.

Eine Brücke 7 steht mit dem Bremsdrehhebel 8 in Kontakt und ist von diesem beim Zuspannen und Lösen der Bremse in Richtung der Bremsscheibenachse 2a auf die Bremsscheibe 2 hin und zurück betätigbar. Beim Lösen der Bremse wird die Brücke 7 durch eine Rückstellfeder 7a in ihre Ausgangslage zurückgedrückt. Die Brücke 7 ist an ihren Enden jeweils mit einer Spindeleinheit 5, 5' über jeweils eine Gewindespindel 6, 6' gekoppelt. Jede Gewindespindel 6, 6' weist ein Außengewinde auf, mit dem jede Gewindespindel 6, 6' in ein zugehöriges Innengewinde der Brücke 7 eingeschraubt ist. Jede Spindeleinheit 5, 5' weist eine Achse 5a, 5'a auf, wobei die Achse 5a der Spindeleinheit 5 als Nachstellerachse 5a und die Achse 5'a der Spindeleinheit 5' als Mitnehmerachse 5'a bezeichnet werden. Die Nachstellerachse 5a und die Mitnehmerachse 5'a verlaufen parallel und liegen parallel zu der Bremsscheibenachse 2a. Die Hebelschwenkachse 9a liegt rechtwinklig zu der Bremsscheibenachse 2a und rechtwinklig zu der Nachstellerachse 5a und der Mitnehmerachse 5'a.

Die in Fig. 1 und Fig. 3 links angeordneten Enden der Spindeleinheiten 5, 5', welche zur Bremsscheibe 2 weisen, sind jeweils mit einem Druckstück 6, 6'a versehen. Die Druckstücke 6, 6'a stehen mit einem Bremsbelagträger 3a eines zuspannseitigen Bremsbelags 3 in Kontakt, welcher auf einer Seite der Bremsscheibe 2 der Scheibenbremse 1 angeordnet ist. Auf der anderen Seite der Bremsscheibe 2 ist ein weiterer Bremsbelag 3 mit Bremsbelagträger 3a im Bremssattel 4 festgelegt. Dieser Bremsbelag 3 wird auch reaktionsseitiger Bremsbelag 3 genannt. Dies ist in Fig. 2 dargestellt. Der Bremssattel 4 kann beispielsweise ein Schiebesattel sein.

Ein Abstand zwischen einem Bremsbelag 3 und der Bremsscheibe 2 wird als Lüftspiel bezeichnet. Bei einem Bremsvorgang wird bei Betätigung der Scheibenbremse 1 zunächst das Lüftspiel überbrückt, indem der Bremsbelag 3 durch die vom Bremshebel 9 betätigte Brücke 7 gegen die Bremsscheibe 2 der Scheibenbremse 1 verstellt wird. Aufgrund des Verschleißes der Bremsbeläge 3 und auch der Bremsscheibe 2 wird das Lüftspiel vergrößert.

Der Begriff "Reibepunkt" ist der Punkt, in welchem der Bremsbelag 3 an der Bremsscheibe 2 der Scheibenbremse 1 anliegt. Der Reibepunkt wird beim Zuspannen nach Überbrückung des Lüftspiels erreicht. Weiteres Zuspannen bewirkt dann durch Anpressen des Bremsbelags 3 an die Bremsscheibe 2 eine Bremsung. Dies gilt natürlich auch für den reaktionsseitigen Bremsbelag 3. Ein Lösen der Zuspannvorrichtung bewirkt eine Umkehrung des oben beschriebenen Vorgangs.

Die Scheibenbremse 1 weist außerdem eine Verschleißnachstellvorrichtung 9 auf, welche zur Nachstellung der Bremsbeläge 3 bei Verschleiß dient, um das ursprüngliche Lüftspiel wiederherzustellen.

Die Verschleißnachstellvorrichtung 9 umfasst eine Nachstelleinrichtung 10, eine Mitnehmereinrichtung 11 und eine Synchroneinheit 12 zur Kopplung von Nachstelleinrichtung 10 und Mitnehmereinrichtung 11.

Die Nachstelleinrichtung 10 wird hier nicht näher erläutert, sie greift um die Gewindespindel 6 von außen herum und ist mit dieser gekoppelt. Eine Längsachse der Nachstelleinrichtung 10 bildet die Nachstellerachse 5a.

Mittels der Synchroneinheit 12 ist die Gewindespindel 6 mit der Gewindespindel 6' der Mitnehmereinrichtung 11 derart gekoppelt, dass eine durch die Nachstelleinrichtung 10 hervorgerufene Verdrehung der Gewindespindel 6 synchron auf die Mitnehmereinrichtung 11 und die mit ihr drehfest verbundene Gewindespindel 6' übertragen wird. Die Gewindespindel 6 ist mit einem Synchronrad 12a, hier ein Kettenrad, der Synchroneinheit 12 drehfest verbunden. Das Synchronrad 12a steht über ein Synchronmittel 12b, hier eine Kette, mit einem weiteren Synchronrad 12'a, das mit dem Mitnehmer 11 direkt oder indirekt und somit mit der Gewindespindel 6' drehfest gekoppelt ist, in Verbindung. Die Kette als Synchronmittel 12b ist längsseitig an der Brücke 7 geführt angeordnet.

Durch jede Zustellbewegung des Bremsdrehhebels 8, bei welcher der Bremsdrehhebel 8 um seine Hebelschwenkachse 8b im Gegenuhrzeigersinn (Fig. 2) verschwenkt, wird die Nachstelleinrichtung 10 angetrieben. Dies erfolgt über einen Nachstellerantrieb 13, der einen mit dem Bremsdrehhebel 8 fest verbundenen Betätiger 13a und ein mit der Nachstelleinrichtung 10 gekoppeltes Nachstellerantriebselement 13b aufweist. Der Betätiger 13a und das Nachstellerantriebselement 13b stehen untereinander in Eingriff, wie in Fig. 3 zu erkennen ist.

Wenn bei der Zustellbewegung des Bremsdrehhebels 8 (noch) kein Verschleiß vorliegt, dann erfolgt aufgrund z.B. einer Überlastkupplung der Nachstelleinrichtung 10 keine Übertragung einer Antriebsbewegung auf die Gewindespindel 6. Liegt jedoch ein Verschleiß vor, so wird die Antriebsbewegung auf die Gewindespindel 6 von der Nachstelleinrichtung 10 übertragen, um den Bremsbelag 3 nachzustellen, wodurch das Lüftspiel auf den ursprünglichen Wert eingestellt wird. Mit der Synchroneinheit 12 wird diese Antriebsbewegung der Gewindespindel 6 auf die Gewindespindel 6' der Mitnehmereinrichtung 11 synchron übertragen. Durch ein Verdrehen der Gewindespindeln 6, 6' in dem jeweiligen Gewinde der Brücke 7 werden die Gewindespindeln 6, 6' in axialer Richtung verstellt, die Drehbewegung wird so in eine lineare Bewegung umgewandelt.

Die Scheibenbremse 1 ist mit einer Sensorvorrichtung ausgerüstet. Die Sensorvorrichtung umfasst eine Sensoreinrichtung 14 und eine Übertragungseinheit 16. Die Sensoreinrichtung 14 dient zur Erfassung eines Verschleißes von Bremsbelägen 3 einschließlich der Bremsscheibe 2. Die Erfassung des Verschleißes erfolgt durch die Erfassung der Nachstellbewegung der Gewindespindel 6 bzw. der damit über die Synchroneinheit 12 gekoppelten Gewindespindel 6'. Die Übertragungseinheit 16 ist zur Übertragung der Drehbewegung der Gewindespindel 6' auf die Sensoreinrichtung 14 vorgesehen. Die Sensoreinrichtung 14 ist mit einem nicht gezeigten Geber, z.B. einem Hall-Sensor, einem Potentiometer, einem induktiven, oder/und optischen oder/und akustischen Geberelement, ausgebildet. Dieser nicht gezeigte Geber ist mit einer Auswerteeinheit eines ebenfalls nicht gezeigten Überwachungssystems verbunden.

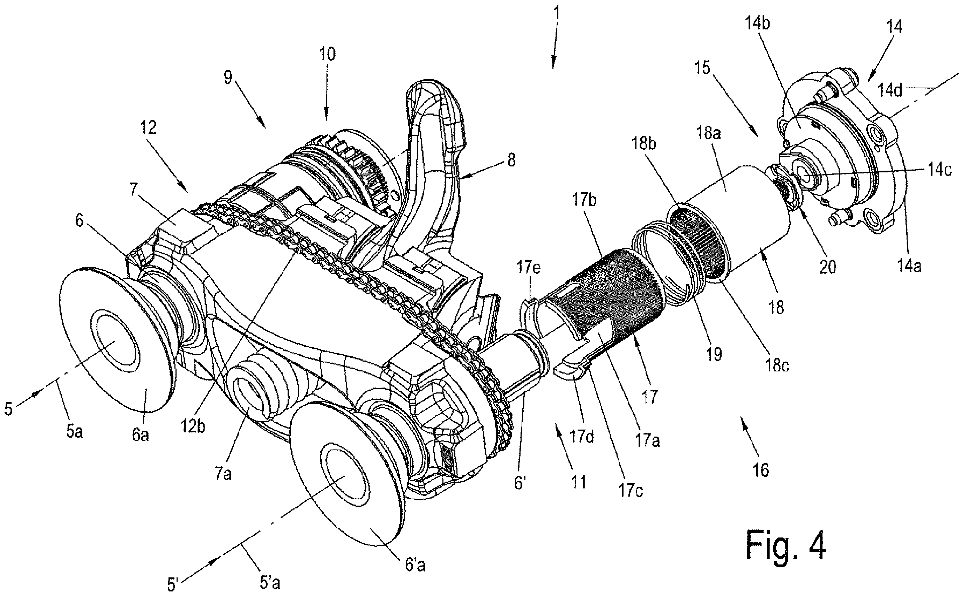

Die Sensoreinrichtung 14 ist hier koaxial zu der Spindeleinheit 5' angeordnet und weist ein Sensorgehäuse 14a auf, welches hier nur teilweise gezeigt ist. Mit dem Sensorgehäuse 14a ist die Sensoreinrichtung 14 von der Zuspannseite her fest an dem Bremssattel 4 angebracht, was nicht näher dargestellt ist. In dem Sensorgehäuse 14a ist ein Sensorgetriebe 14b angeordnet. Das Sensorgetriebe 14b ist zuspannseitig mit dem nicht gezeigten Geber gekoppelt. Belagseitig ist das Sensorgetriebe 14b mit mindestens einem Getriebeeingang 14c (siehe Fig. 4) versehen, der über einen Sensorantrieb 15 mit der Übertragungseinheit 16 gekoppelt ist.

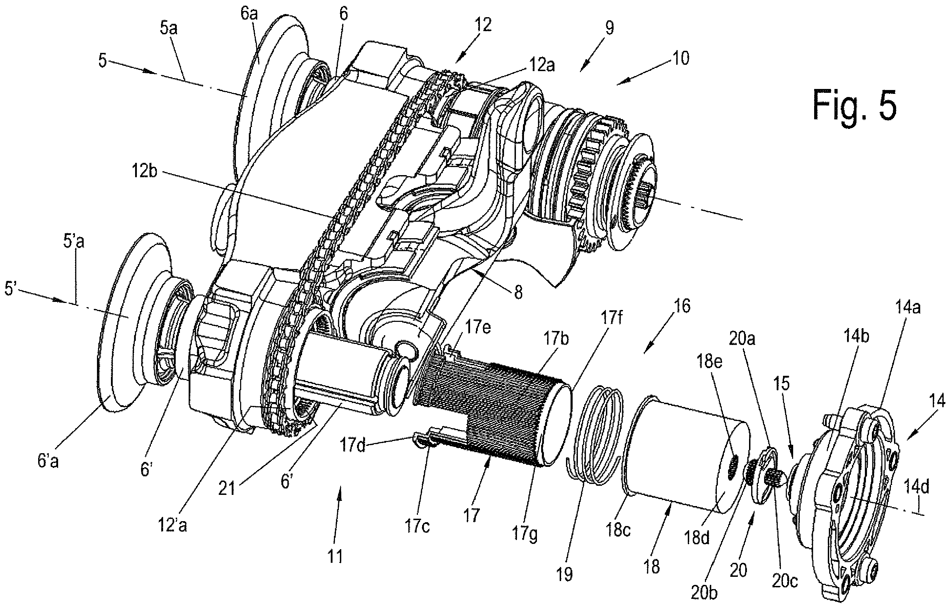

Die Übertragungseinheit 16 umfasst eine Antriebshülse 17, eine Abtriebshülse 18, ein Federelement 19 und einen Mitnehmer 20 (siehe Fig. 4 und 5).

Die Antriebshülse 17 der Übertragungseinheit 16 ist über die Gewindespindel 6' geschoben und mit dem Synchronrad 12'a in einer Weise drehfest gekoppelt, die unten noch ausführlich erläutert wird. Die Abtriebshülse 18 ist über die Antriebshülse 17 geschoben und ist mit dieser ebenfalls drehfest gekoppelt, wobei die Abtriebshülse 18 auf der Antriebshülse 17 axial verschiebbar ist. Zwischen einem belagseitigen Ende der Abtriebshülse 18 und dem belagseitigen Ende der Antriebshülse 17 ist das Federelement 19 angeordnet, welches hier als Druckfeder ausgebildet ist, eine axiale Vorspannkraft auf die Abtriebshülse 18 ausübt und diese in Richtung auf die Sensoreinrichtung 14 hin drückt. Das zuspannseitige Ende der Abtriebshülse 18 ist über den Mitnehmer 20 (Fig. 4 und 5) mit der Sensoreinrichtung 14 gekoppelt.

Dies wird nun im Zusammenhang mit Fig. 4 und 5 im Detail beschrieben.

In Fig. 4 ist eine schematische Perspektivansicht des Ausführungsbeispiels nach Fig. 1 mit einer Explosionsdarstellung der Übertragungseinheit 16 gezeigt. Die Ansicht ist von der Belagseite her gesehen. Eine weitere schematische Perspektivansicht hierzu mit Explosionsdarstellung der Übertragungseinheit 16 zeigt Fig. 5 von der Zuspannseite her gesehen.

Die Gewindespindeln 6 und 6' sind als massive Wellen ausgebildet, wie die Gewindespindel 6' erkennen lässt, welche aus der Brücke 7 durch das in der Brücke 7 gelagerte Synchronrad 12'a zuspannseitig hervorsteht.

Die Antriebshülse 17 weist einen kreisrunden hohlzylindrischen Körper 17a auf, auf dessen Außenfläche ein Außenprofil 17b angeordnet ist. Das Außenprofil 17b ist eine Verzahnung einer Wellen-Naben-Verbindung, z.B. eine Kerbverzahnung. Natürlich sind andere Verzahnungsarten, beispielsweise Zahnwellenprofil, Keilwellenprofil, Polygonprofil u.dgl., auch möglich.

An einem belagseitigen Endabschnitt ist die Antriebshülse mit einem Antriebsprofil 17c versehen, welches auch als eine Verzahnung einer Wellen-Naben-Verbindung ausgebildet ist. Dieses Antriebsprofil 17c ist zu dem belagseitigen Ende hin von einem Flansch 17d begrenzt, der sich radial nach außen höher als das Antriebsprofil 17c erstreckt. Das Antriebsprofil 17c ist auf einem Antriebsabschnitt 17e angeordnet, welcher mit dem Körper 17a verbunden ist und einen größeren Außendurchmesser als der Körper 17a aufweist. Von dem belagseitigen Ende der Antriebshülse 17 ausgehend ist die Antriebshülse 17 hier mit Schlitzen 17i versehen, die unten noch weiter erläutert werden.

Ein zuspannseitiges Ende der Antriebshülse 17 weist eine Stirnseite 17f auf. Ein profilfreier Stirnabschnitt 17g ist zwischen einem Ende des Außenprofils 17b und der Stirnseite 17f angeordnet.

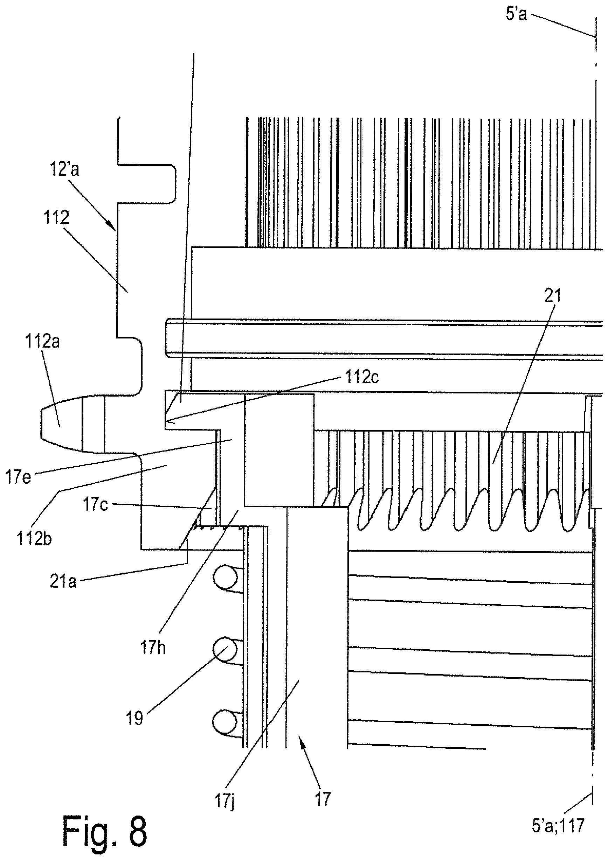

Die Antriebshülse 17 der Übertragungseinheit 16 ist im zusammengebauten Zustand derart über den hervorstehenden zuspannseitigen Abschnitt der Gewindespindel 6' geschoben, dass der belagseitige Flansch 17d in einer Innennut 112c (siehe Fig. 8) des Synchronrads 12'a liegt und dass das Antriebsprofil 17c mit einem Abtriebsprofil 21 (siehe auch Fig. 8) in einem drehfesten Eingriff steht. Dies wird unten im Zusammenhang mit Fig. 8 noch ausführlich beschrieben.

Die Abtriebshülse 18 weist einen Körper 18a mit einem Innenprofil 18b auf, welches als eine Verzahnung einer Wellen-Naben-Verbindung ausgebildet ist, die mit der Verzahnung des Außenprofils 17b der Antriebshülse 17 korrespondiert. Ein belagseitiges Ende der Abtriebshülse 18 ist mit einem flanschartigen Rand 18c versehen, der radial nach außen von der Außenfläche des Körpers 18a hervorsteht und mit seiner belagseitigen Stirnfläche eine Auflage für das Federelement 19 bildet. Ein zuspannseitiges, der Antriebshülse 17 abgewandtes Ende der Abtriebshülse 18 ist mit einem Boden 18d verschlossen, welcher eine Öffnung mit einem Öffnungsprofil 18e aufweist.

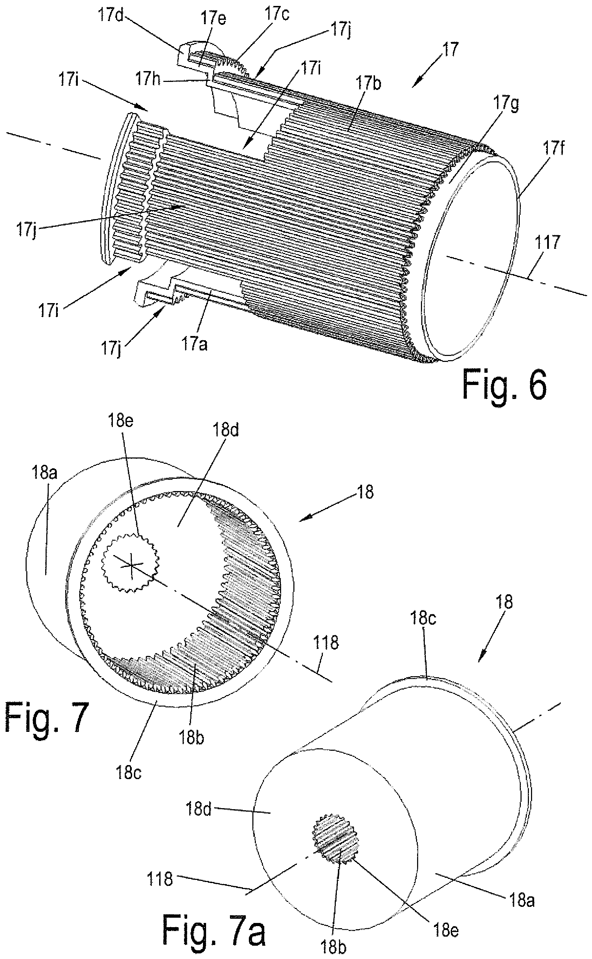

Der Mitnehmer 20 ist mit einem Körper 20a ausgebildet, welcher eine Desachsierung ausgleichen kann und daher einen entsprechenden elastischen Aufbau aufweist, auf den hier nicht näher eingegangen werden soll. Eine solche Desachsierung kann zwischen einer Mittelachse 118 der Abtriebshülse 18 (siehe Fig. 7 und 7a) und einer Sensorachse 14d eines Getriebeeingangs 14c der Sensoreinrichtung 14 vorkommen.

Belagseitig ist der Körper 20a mit einem zapfenartigen Eingangsabschnitt 20b verbunden, wobei ein weiterer zapfenartiger Ausgangsabschnitt 20c auf zuspannseitig mit dem Körper 20a verbunden ist. Der Eingangsabschnitt 20b erstreckt sich in axialer Richtung zur Belagseite hin und ist mit einem Außenprofil, z.B. eine Kerbverzahnung, versehen, welches mit dem Öffnungsprofil 18e der Öffnung des Bodens 18d der Abtriebshülse 18 korrespondiert.

Der Ausgangsabschnitt 20c erstreckt sich zuspannseitig in axialer Richtung zur Sensoreinrichtung 14 hin und ist mit einem Außenprofil, z.B. eine Kerbverzahnung, versehen, welches mit einem Innenprofil des Getriebeeingangs 14c des Sensorgetriebes 14b der Sensoreinrichtung 14 korrespondiert.

Der Mitnehmer 20 ist im zusammengebauten Zustand der Übertragungseinheit 16 mit seinem Eingangsabschnitt 20b in der Öffnung mit dem Öffnungsprofil 18e der Abtriebshülse 18 eingesteckt und so mit der Abtriebshülse 18 drehfest aber axial verschiebbar gekoppelt. Außerdem ist der Mitnehmer 20 mit seinem Ausgangsabschnitt 20c in dem Innenprofil des Getriebeeingangs 14c der Sensoreinrichtung 14 eingesteckt, wobei eine drehfeste und axial verschiebbare Kopplung zwischen dem Mitnehmer 20 und somit der Übertragungseinheit 16 und dem Sensorgetriebe 14b der Sensoreinrichtung 14 gebildet ist.

In Fig. 6 ist eine schematische Perspektivansicht der Antriebshülse 17 dargestellt.

Die Antriebshülse 17 ist oben schon beschrieben worden. In der in Fig. 6 gezeigten vergrößerten Darstellung sind weitere Einzelheiten besser zu erkennen, die noch ergänzend erläutert werden sollen.

Das Außenprofil 17b weist auf dem Stirnabschnitt 17g zuspannseitig gerundete Enden der Profilierung auf, die einen erleichterten Zusammenbau, d.h. ein einfaches Einfädeln des Innenprofils 18b der Abtriebshülse 18, beim Aufschieben der Abtriebshülse 18 auf die Antriebshülse 17 ermöglichen.

Das Außenprofil 17b endet belagseitig an einem Absatz 17h, der sich radial nach außen erstreckt und mit dem Antriebsabschnitt 17e verbunden ist.

Ein Schlitz 17i ist in der Projektion auf eine Ebene rechteckig ausgebildet. Seine Längsseiten verlaufen parallel zu einer Mittelachse 117 der Antriebshülse 17 und erstrecken sich axial in einer Länge, die etwa den halben Wert der Gesamtlänge der Antriebshülse 17 ausmacht. Die Breite eines Schlitzes 17i (wieder in der Projektion auf eine Ebene) entspricht etwa der halben Länge des Schlitzes 17i. Es sind z.B. drei Schlitze 17i vorgesehen, welches als Ausnehmungen in den Körper 17a der Antriebshülse 17 eingeformt sind und die belagseitige Hälfte der Antriebshülse 17 in drei Halteabschnitte 17j aufteilen. Das Außenprofil 17b endet im Bereich der Schlitze 17i direkt an den Schmalseiten der Schlitze 17i.

Es kann mindestens ein Schlitz 17i vorgesehen sein. In diesem Ausführungsbeispiel sind es drei Schlitze 17i.

Fig. 7 zeigt eine schematische Perspektivansicht der Abtriebshülse 18 von der Belagseite her gesehen, wobei Fig. 7a eine schematische Perspektivansicht der Abtriebshülse 18 von der Zuspannseite her gesehen zeigt.

Die Abtriebshülse 18 ist bereits oben erläutert worden. In den vergrößerten Ansichten nach Fig. 7 und 7a werden noch weitere Details beschrieben.

Der Körper 18a ist topfförmig als kreisförmiger Hohlzylinder mit dem Boden 18d ausgebildet und besitzt eine Mittelachse 118. Das Innenprofil 18b ist über die gesamte Länge der Abtriebshülse 18 an der Innenwand angebracht. In dem Boden 18d ist die zur Mittelachse 118 konzentrische Öffnung vorgesehen. Das Öffnungsprofil 18e der Öffnung ist in den Rand der Öffnung eingeformt und ist z.B. eine Kerbverzahnung.

Die Antriebshülse 17 und die Abtriebshülse 18 sind aus einem elastischen und duktilen Material hergestellt, wodurch die Relativbewegungen zwischen dem Synchronrad 12'a und dem Getriebeeingang 14c des Sensorgetriebes 14b der Sensoreinrichtung 14 ausgeglichen werden können.

Schließlich zeigt Fig. 8 eine vergrößerte schematische Schnittansicht des Bereiches VIII aus Fig. 3.

In Fig. 8 ist die Befestigung des belagseitigen Endes der Antriebshülse 17 in dem zu der Mitnehmereinrichtung 11 und der Gewindespindel 6' zugehörigen Synchronrad 12'a vergrößert dargestellt.

Das Synchronrad 12'a ist in nicht gezeigter Weise mit der Gewindespindel 6' drehfest verbunden, wobei gleichzeitig eine axiale relative Bewegung, die durch die Verdrehung der Gewindespindel 6' beim Nachstellen in der Brücke 7 entsteht, ermöglicht ist.

Das Synchronrad 12'a weist einen Synchronradkörper 112 auf, an dessen Außenfläche eine Verzahnung 112a, hier eine Kettenverzahnung, zur Zusammenwirkung mit dem Synchronmittel 12b, hier eine Kette, angeformt ist. Die Verzahnung 112a ist mit einem zuspannseitig darunter angeordneten, ringförmigen Übertragungsabschnitt 112b verbunden, welcher an seiner Innenwand mit dem Abtriebsprofil 21 als Wellen-Naben-Verbindung, z.B. eine Kerbverzahnung, versehen ist. Das Abtriebsprofil 21 korrespondiert mit dem Antriebsprofil 17c derAntriebshülse 17.

Weiterhin ist in einem Verbindungsabschnitt zwischen dem Übertragungsabschnitt 112b und der Verzahnung 112a, d.h. am belagseitigen inneren Ende des Übertragungsabschnitts 112b hinter dem Abtriebsprofil 21 eine Innennut 112c eingeformt, deren Innendurchmesser größer ist als ein Innendurchmesser des Übertragungsabschnitts 112b.

Aufgrund der Schlitze 17i in der Antriebshülse 17 können die Halteabschnitte 17j beim Zusammenbau der Übertragungseinheit 16 beim Einsetzen der Antriebshülse 17 derart zusammengedrückt werden, dass die Antriebshülse 17 beim Aufschieben über den zuspannseitig hervorstehenden Abschnitt der Gewindespindel 6' mit ihrem belagseitigen Ende in den Übertragungsabschnitt 112b und die Innennut 112c des Synchronrads 12'a eingeschoben werden kann. Sobald das belagseitige Ende der Antriebshülse 17 mit ihrem Flansch 17d das innere belagseitige Ende des Übertragungsabschnitts 112b erreicht hat, werden die Halteabschnitte 17j wieder losgelassen. Dann federn die Halteabschnitte 17j zurück in ihre Ausgangslage, wobei der Flansch 17d in der Innennut 112c aufgenommen ist und das Antriebsprofil 17c der Antriebshülse 17 mit dem Abtriebsprofil 21 des Synchronrads 12'a in Eingriff kommt. Der Flansch 17d bewirkt in seiner Lage in der Innennut 112c eine axiale Halterung der Antriebshülse 17 und verbindet so die Antriebshülse 17 mit dem Synchronrad 12'a. Das mit dem Abtriebsprofil 21 des Synchronrads 12'a in Eingriff stehende Antriebsprofil 17c bildet eine drehfeste Verbindung der Antriebshülse 17 mit dem Synchronrad 12'a.

Die Innennut 112c weist eine größere axiale Länge als der Flansch 17d der Antriebshülse 17 auf. Somit kann ein Winkel zwischen der Mittelachse 117 der Antriebshülse 17 und der Mittelachse des Synchronrads 12'a, welches hier die Mitnehmerachse 5'a ist, ermöglicht werden.

Der Flansch 17d ist an seiner vorderen Kante mit einer Fase versehen. Außerdem ist der Übertragungsabschnitt 112b in seinem zuspannseitigen Umfang ebenfalls mit einer Fase ausgebildet. Diese beiden Fasen erleichtern ein Einsetzen des belagseitigen Endes der Antriebshülse 17 in das Synchronrad 12'a.

Das Federelement 19 stützt sich hier auf dem Ansatz 17h der Antriebshülse 17 ab.

Eine Verdrehung der Gewindespindel 6, z.B. aufgrund einer Nachstellung, wird über die Synchroneinheit 12 auf das mit der Gewindespindel 6' drehfest verbundene Synchronrad 12'a übertragen. Das mit dem Abtriebsprofil 21 des Synchronrads 12'a in Eingriff stehende Antriebsprofil 17c überträgt diese Drehbewegung auf die Antriebshülse 17, welches ihrerseits die Drehbewegung über ihr Außenprofil 17b auf das mit dem Außenprofil 17b in Eingriff stehende Innenprofil 18b der Abtriebshülse 18 und somit auf die Abtriebshülse 18 überträgt. Die Drehbewegung wird so von der Abtriebshülse 18 über das Öffnungsprofil 18c auf den Mitnehmer 20 übertragen, welcher die Drehbewegung auf den Getriebeeingang 14c der Sensoreinrichtung 14 überträgt.

Die Übertragungseinheit 16 kann mit der Antriebshülse 17 und der Abtriebshülse 18 wie eine Kardanverbindung zwischen dem Synchronrad 12'a und dem Sensorgetriebe 14b der Sensoreinrichtung 14 wirken. Somit ist die Übertragungseinheit 16 in der Lage die folgenden Probleme zu lösen.
- Die Gewindespindeln 6, 6' erfahren mit der Betätigung der Bremse, d.h. beim Zuspannen und Lösen, eine lineare Bewegung.

Dies wird durch die axiale Verschiebbarkeit von Antriebshülse 17 und Abtriebshülse 18 einschließlich der Vorspannkraft des Federelementes 19 ausgeglichen.
- Die Gewindespindeln 6, 6' führen infolge eines so genannten Brückenkippens eine Verdrehbewegung um den Führungspunkt der Brücke 7 aus.

Aufgrund der Dimensionierung der Innennut 112c des Synchronrads 12'a und des darin aufgenommenen Flansches 17d der Antriebshülse 17 kann ein Winkel zwischen Mittelachse 117 der Antriebshülse 17 und der Mittelachse des Synchronrads 12'a, welche hier die Mitnehmerachse 5'a ist, ausgeglichen werden.
- Der Getriebeeingang 14c der Sensoreinrichtung 14 ist ortsfest, da die Sensoreinrichtung 14 mit ihrem Gehäuse 14a fest im Bremssattel 4 befestigt ist.
- Der Mitnehmer 20 gleicht einen Achsversatz sowie auch Winkelfehler aus.
- Infolge von Positionstoleranzen sind eine Desachsierung sowie ein Winkelversatz zwischen der Sensorachse 14d des Getriebeeingangs 14c und der Mitnehmerachse 5'a der Gewindespindel 6' vorhanden.

Diese Desachsierung kann durch die Gestaltung des Mitnehmers 20 ausgeglichen werden.

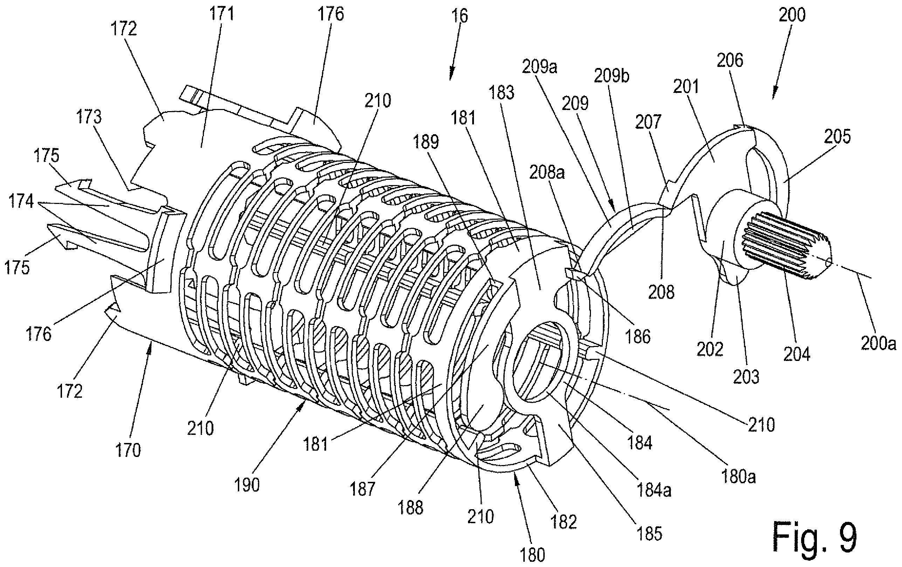

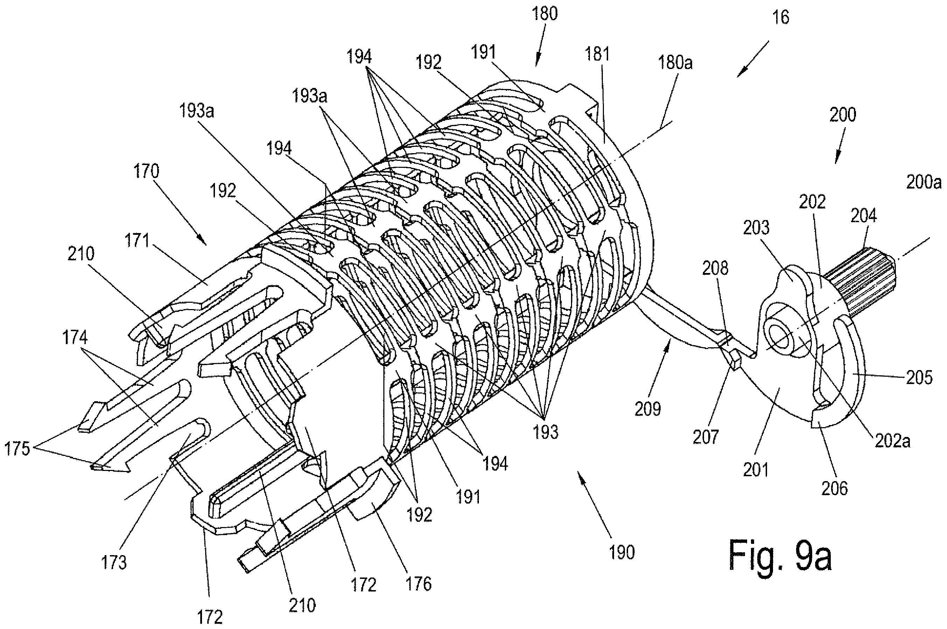

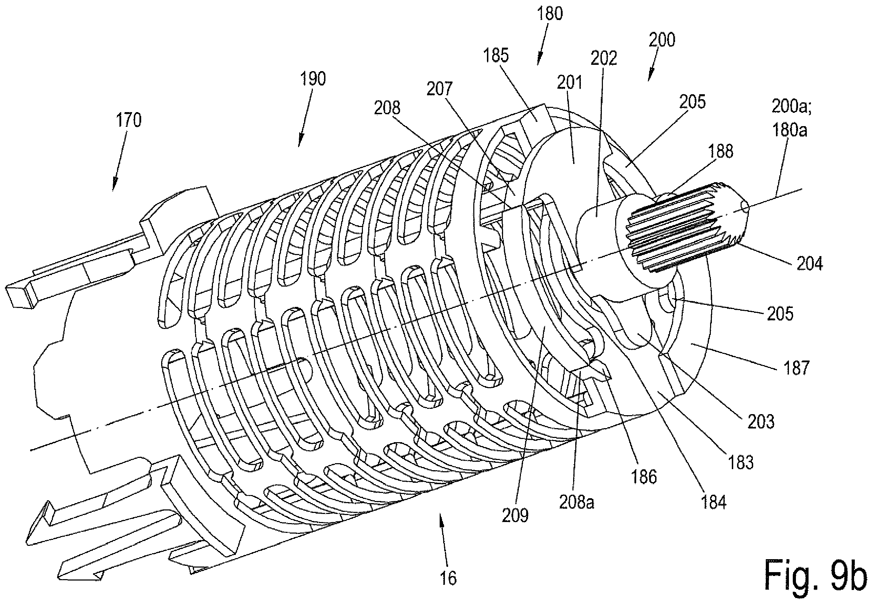

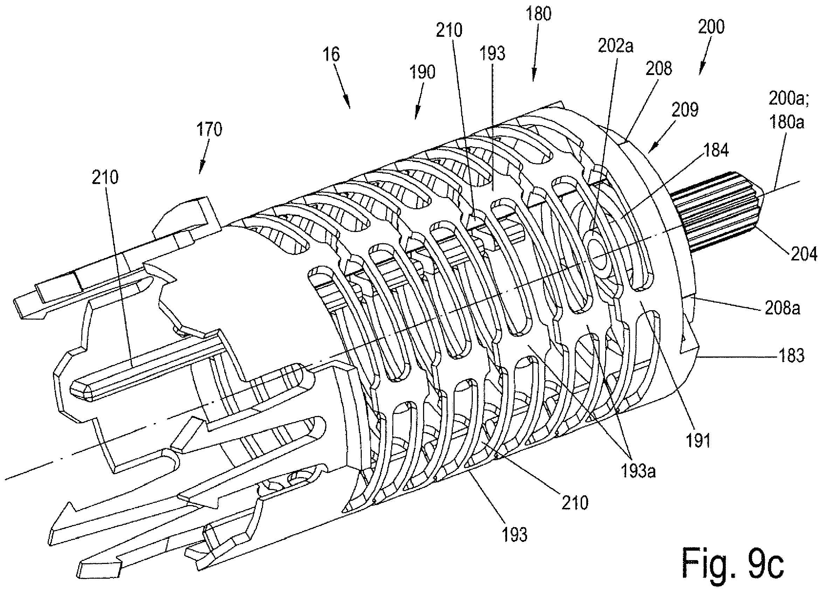

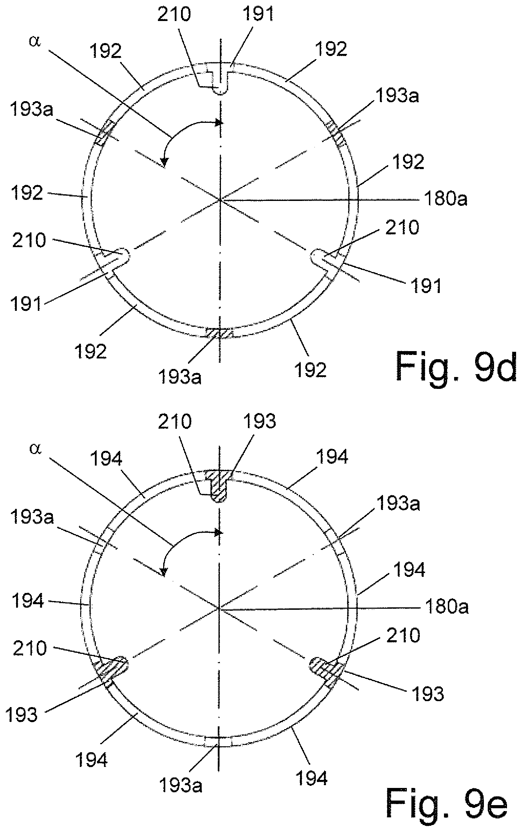

Fig. 9-9c zeigen perspektivische Ansichten einer Variante der Übertragungseinheit 16. So zeigen Fig. 9 und 9a die Übertragungseinheit in einer nicht zusammengebauten Stellung aus verschiedenen Blickwinkel, wohingegen Fig. 9b und 9c die Übertragungseinheit 16 in einer zusammengebauten Stellung auch aus verschiedenen Blickwinkel darstellen. Fig. 9d und 9e zeigen Teilschnittansichten eines Federelementes 190 der Variante nach Fig. 9-9c.

Die Übertragungseinheit 16 dieser Variante umfasst eine Antriebshülse 170, eine Abtriebshülse 180, ein Federelement 190 und einen Mitnehmer 200.

Diese Variante der Übertragungseinheit 16 unterscheidet sich von der Übertragungseinheit 16 nach Fig. 3-8 einerseits dadurch, dass die Antriebshülse 170, die Abtriebshülse 180, das Federelement 190 und der Mitnehmer 200 einstückig ausgebildet sind. Dabei ist der Mitnehmer 200 an der Abtriebshülse 180 als Montageteil unverlierbar angebracht. Diese noch nicht zusammengebaute Stellung zeigen Fig. 9-9a. Die Antriebshülse 170, das Federelement 190 und die Abtriebshülse 180 weisen hier eine gemeinsame Mittelachse 180a auf.

Andererseits sind die Gestaltungen der Funktionsteile 170, 180, 190, 200 unterschiedlich ausgeführt. So weist die Antriebshülse 170 einen kreisrunden hohlzylindrischen Körper 171 auf, an dessen belagseitigem Endabschnitt hier drei am Umfang regelmäßig verteilte Vorsprünge 172 angeformt sind, die sich in axialer Richtung zur Belagseite hin erstrecken. Die Vorsprünge 172 sind hier rechteckförmig, wobei ihre freien Ecken jeweils mit einer Fase versehen sind. Die Vorsprünge 172 dienen zur drehfesten Verbindung der Antriebshülse 170 und somit der Übertragungseinheit 16 mit dem Synchronrad 12'a, wenn die Übertragungseinheit 16 vollständig über die Gewindespindel 6' geschoben ist. Es ist natürlich auch möglich, dass anstelle der Vorsprünge 172 Vertiefungen mit gleicher oder ähnlicher Form vorgesehen sind. Dazu weist das Synchronrad 12'a entsprechende Schlitze oder Vorsprünge auf, die hier nicht gezeigt sind, was aber leicht verständlich ist.

Außerdem weist die Antriebshülse 170 jeweils zwischen zwei Vorsprüngen 172 eine Ausnehmung 173 auf, in welcher jeweils eine Rasteinrichtung angeordnet ist, mit der die Übertragungseinrichtung 16 mit dem Synchronrad 12'a axial verriegelbar ist. Diese Rasteinrichtungen weisen jeweils zwei Haltearme 174 mit jeweils einer Nase 175 auf. Dabei erstrecken sich jeweils zwei Haltearme 174, die am Umfang in der jeweiligen Ausnehmung 173 nebeneinander beabstandet angeordnet sind, axial zur Belagseite hin über den belagseitigen Endabschnitt der Antriebshülse 170 hinaus. Die Nasen 175 an den freien Enden der Haltearme 74 sind spiegelbildlich angeordnet, wobei sie Rasthaken bilden, deren Rastkanten jeweils zu einem Vorsprung 172 hin weisen.

Zur Zusammenwirkung mit den Nasen 175 und ihren Rastkanten weist das Synchronrad 12'a entsprechende Aufnahmen auf, die nicht gezeigt, aber leicht vorstellbar sind.

Die Haltearme 174 sind an ihren am Endabschnitt der Antriebshülse 170 oberhalb der Ausnehmungen 173 angebrachten Ende zusammen verbunden, auf der Außenwand des Körpers 171 der Antriebshülse 170 angeordnet und enden jeweils zusammen in einem Kragenabschnitt 176. Die Kragenabschnitte 176 erstrecken sich am Umfang des Körpers 171 etwa über den Umfang einer jeweiligen zugehörigen Ausnehmung 173 und stehen radial von der Außenwand des Körpers 171 der Antriebshülse 170 ab, wobei die Kragenabschnitte 176 Flanschabschnitte ähnlich den Flanschen 17d (Fig. 6) der Antriebshülse 17 bilden.

Die Kragenabschnitte 176 der Haltearme 174 in den Bereichen zwischen den Vorsprüngen 172 dienen als Auflagefläche für eine (nicht gezeigte) Montagehülse zur Übertragung einer axialen Montagekraft, damit die Haltearme 174 mit ihren Nasen 175 (die auch hakenförmig bezeichnet werden können) in das zugehörige Gegenstück hineingedrückt werden können. Die Bereiche mit den Vorsprüngen 172 sind hier jeweils mit einem an den zugehörigen Innenwänden des Körpers 171 der Antriebshülse 170 angebrachten Steg 210 versehen (siehe auch Fig. 9a, 9c). Die Stege 210 verlaufen in Axialrichtung durch die Antriebshülse 170 und das Federelement 190 hindurch in die Abtriebshülse 180. Dabei sind die Stege 210 im Bereich des Federelementes 190 in einzelnen Abschnitte axial getrennt, was unten noch erläutert wird und in Fig. 9c am besten zu erkennen ist. Die Funktion der Stege 210 besteht darin, als axiale Führungsstege zu dienen, welche mit axialen Nuten der zugehörigen Gewindespindel 6' in Eingriff stehen.

Das zuspannseitige Ende der Antriebshülse 170 ist mit dem Federelement 190 verbunden.

Das Federelement 190 umfasst Federarmhalter 191, Federarme 192, 194 und Federarmverbinder 193, 193a. Eine gedachte Hüllform des Federelementes 190 ist ein kreisrunder Hohlzylinder mit der Mittelachse 180a, wobei die Federarme 192, 194 jeweils Ringe bilden, die in Axialrichtung hintereinander jeweils hier in gleichen Abständen zueinander angeordnet sind. Die Ringe weisen hier eine Kreisform auf. Ein solcher Kreisring besteht hier aus sechs Federarmen 192, 194. Die Federarmverbinder 193, 193a verbinden die Federarme 192, 194 eines jeweiligen Kreisrings und eines axial daneben angeordneten Kreisrings in einer bestimmten Weise, die unten noch beschrieben wird, abwechselnd untereinander, wobei dadurch der Abstand der Kreisringe festgelegt ist. Das Federelement 190 weist hier elf Kreisringe auf. Jeder Federarm 192, 194 ist als ein Kreisringabschnitt ausgebildet.

Fig. 9d zeigt in einer Teilschnittansicht einen ersten Kreisring in Draufsicht (in Blickrichtung auf die Stirnseite der Antriebshülse 170) in einer Querschnittansicht des Federelementes 190 nach Fig. 9 quer zur Mittelachse 180a. Dieser erste Kreisring dient zur Verbindung des Federelementes 190 mit der Antriebshülse 170 über hier drei am Umfang der Antriebshülse 170 verteilte Federarmhalter 191. Jeder Federarmhalter 191 ist an dem zuspannseitigen Ende der Antriebshülse 170 einem Vorsprung 172 gegenüberliegend angebracht und steht parallel zur Mittelachse 180a um ein bestimmtes Maß hervor. An der Innenseite eines jeden Federarmhalters 191 ist jeweils ein Steg 210 in Verlängerung von der Innenwand des Körpers 171 angeformt.

Der erste Kreisring zur Verbindung des Federelementes 190 mit der Antriebshülse 170 ist wie folgt aufgebaut. Beginnend an dem in Fig. 9d oben gezeigten Federarmhalter 191 (auf 12 Uhr) ist im Gegenuhrzeigersinn verlaufend an dem freien Ende des Federarmhalters 191 ein Federarm 192 mit einem Ende angebracht. Das andere Ende des Federarms 192 ist über einen Federarmverbinder 193 mit einem weiteren Federarm 192 verbunden, dessen anderes Ende wieder an einem weiteren Federarmhalter 191 (auf 8 Uhr) befestigt ist. Ein Winkel α zwischen einem Federarmhalter 191 und einem Federarmverbinder 193 beträgt hier 60°, wobei jeweils ein Winkel zwischen zwei Federarmhaltern 191 bzw. zwischen zwei Federarmverbindern 192 2α=120° beträgt.

In gleicher Weise ist dieser Federarmhalter 191 (auf 8 Uhr) mit dem nächsten Federarmhalter 191 (auf 4 Uhr) über zwei mit einem Federarmverbinder 193 verbundene Federarme 192 verbunden. Auch dieser nächste Federarmhalter 191 (auf 4 Uhr) ist ebenso mit dem Federarmhalter 191 (auf 12 Uhr) über zwei mit einem Federarmverbinder 193 verbundene Federarme 192 verbunden.

Die Federarmhalter 193a weisen hier keine Stege 210 auf und erstrecken sich parallel zu der Mittelachse 180a in Längsrichtung bis zum nächsten Kreisring, mit dem sie eine axiale Verbindung bilden.

Der nächste Kreisring ist in Fig. 9e dargestellt. Er besteht hier auch aus sechs Federarmen 194. Ausgehend von dem Federarmverbinder 193a (auf 10 Uhr), der von dem ersten Kreisring (Fig. 9d) axial in diese Kreisringebene der Fig. 9e hervorsteht, ist im Gegenuhrzeigersinn ein Federarm 194 mit einem Ende angebracht. Das andere Ende dieses Federarms 194 ist mit einem Federarmverbinder 193 (auf 8 Uhr) verbunden, welcher an seiner Innenseite mit einer Steg 210 versteift ist und eine axiale Verbindung mit dem nächsten Kreisring bildet, der über der Zeichnungsebene der Fig. 9e liegt. Diese Steg 210 ist nicht mit der Steg 210 des ersten Kreisrings verbunden, sondern von ihr getrennt, verläuft aber in gleicher Richtung. Der Federarmverbinder 193 (auf 8 Uhr) mit Steg 210 ist mit einem Federarm 194 verbunden, welcher an einem Federarmverbinder 193a (auf 6 Uhr) angebracht ist, der eine axiale Verbindung mit dem ersten Kreisring und eine tangentiale Verbindung mit einem weiteren Federarm 194 herstellt. Der weitere Federarm 194 ist an dem nächsten Federarmverbinder 193 (auf 4 Uhr) angebracht, welcher eine axiale Verbindung zu dem nächsten Kreisring und eine tangentiale Verbindung zu dem nächsten Federarm 194 ist. In gleicher Weise bilden die weiteren Federarmverbinder 193a eine axiale Verbindung zu dem ersten Kreisring und die weiteren Federarmverbinder 193 eine axiale Verbindung zu dem nächsten Kreisring, sowie tangentiale Verbindungen mit den weiteren Federarmen, wie aus Fig. 9e deutlich zu erkennen ist.

In dieser Weise ist das Federelement 190 mit in axialer Richtung der Mittelachse 180a quer dazu parallel zueinander angeordneten Kreisringen aufgebaut. Der letzte Kreisring bildet eine Verbindung des Federelementes 190 mit der Abtriebshülse 180 und ist wie der erste Kreisring mit Federarmen 192 ausgebildet, welche abwechselnd über Federarmhalter 191 mit einem Körper 181 der Abtriebshülse 180 und über Federarmverbinder 193a mit dem vorletzten Kreisring des Federelementes 190 verbunden sind (siehe Fig. 9d).

Die Federarme 192, 194 ermöglichen aufgrund ihrer tangentialen Anordnung und ihrer axialen Verbindungen der von ihnen gebildeten Kreisringe, dass eine Verdrehung der Antriebshülse 170 um die Mittelachse 180a auf die Abtriebshülse 180 spielarm und steif übertragbar ist. Weiterhin können die Federarme 192, 194 in axialer Richtung federn. So ist ein Axialhub der zu verbindenden Bauteile möglich, wie auch eine axiale Vorspannung zwischen den zu verbindenden Bauteilen gewährleistet. In anderen Richtungen können die Federarme 192, 194 ebenfalls federn und somit gleichzeitig einen Achsversatz und/oder eine Winkelfehlstellung der zu verbindenden Bauteile erlauben.

Der Körper 181 der Abtriebshülse 180 ist hier kreiszylinderförmig ausgebildet und weist an seiner belagseitigen Stirnseite die Federarmverbinder 191 auf, die an ihren Innenseiten mit Stegen 210 versehen sind, wobei sich die Stege 210 auch auf der Innenwand des Körpers 181 der Abtriebshülse 180 parallel zu der Mittelachse 180a weiter erstrecken. Eine Stirnseite 182 des Körpers 181 ist teilweise von einem plattenähnlichen Stirnflächenabschnitt 183 bedeckt, welcher diagonal im Zentrum in einen ringförmigen Stirnflächenabschnitt 184 mit einer Öffnung 184a übergeht und dann in einem weiteren, schmaleren Stirnflächenabschnitt 185 bis zum gegenüberliegenden Rand der Stirnseite 182 verläuft, mit dem dieser Stirnflächenabschnitt 185 über einen axial verlaufenden Abschnitt verbunden ist.

An einer Seite des plattenähnlichen Stirnflächenabschnitts 183 ist ein axial zur Zuspannseite hervorstehender Lagervorsprung 186 angeformt, an welchem der unten weiter erläuterte Mitnehmer 200 angebracht ist. Auf der Gegenseite des plattenähnlichen Stirnflächenabschnitts 183 ist ein Deckabschnitt 187 mit einem kreisförmig ausgebildeten freien Endabschnitt 188 angebracht. Der Deckabschnitt 187 erstreckt sich am Umfang des Körpers 181 über einen bestimmten Winkelabschnitt, wobei zwischen der Unterseite des Rands des Deckabschnitts 187 und der Stirnseite 182 des Körpers 181 ein Schlitz 189 festgelegt ist. Dieser Schlitz 189 ist dadurch gebildet, dass die Ebene des Deckabschnitts 187 mit dem Endabschnitt 188 zu der Ebene des plattenähnlichen Stirnflächenabschnitts 183 axial zur Zuspannseite hin über einen Absatz versetzt angeformt ist. Der Schlitz 189 nimmt einen Arm 205 des Mitnehmers 200 im zusammengebauten Zustand auf legt ihn axial fest. Der kreisförmige Endabschnitt 188 dient zur Versteifung des Deckabschnitts 187 und zur Vergrößerung der Aufnahmefunktion des Schlitzes 189.

Der Mitnehmer 200 ist mit einem Körper 201 mit einer Zunge 203 ausgebildet, welcher ähnlich wie der plattenförmige Stirnflächenabschnitt 183 der Abtriebshülse 180 ausgebildet ist und an seinem Außenrand einen Radius aufweist. Im Zentrum weist der Körper 201 einen axial hervorstehenden Dom 202 auf, welcher einen Ausgangsabschnitt 204 mit einer Profilierung aufweist, die schon oben weiter beschrieben ist. Der Ausgangsabschnitt 204 und der Dom 202 weisen eine Mittelachse 200a auf.

An der Seite des plattenförmigen Körpers 201, die in dem nicht zusammengebauten Zustand nach Fig. 9, 9a zur der Abtriebshülse 180 weist, ist ein zur Belagseite hin hervorstehender Lagervorsprung 207 (ähnlich dem Lagervorsprung 186) angeformt, an welchem ein Verbindungsabschnitt 209 mit einem Ende über ein Lager 208 verschwenkbar angebracht ist. Das andere Ende des Verbindungsabschnitts 209 ist ebenfalls über ein Lager 208a an dem Lagervorsprung 186 der Abtriebshülse 180 verschwenkbar angelenkt. Die Verschwenkachsen der Lager 208, 208a verlaufen parallel zu der Mittelachse 180a. Der Verbindungsabschnitt 209 weist eine kreiszylinderabschnittsförmige Wand 209a auf, welcher senkrecht auf einem Plattenabschnitt 209b angebracht ist. Die Lager 208, 208a können z.B. Filmscharniere sein.

An der dem Lagervorsprung 207 gegenüberliegenden Seite des plattenförmigen Körpers 201 des Mitnehmers 200 ist der Arm 205 so über eine absatzförmige Verbindung 206 angebracht, dass der Arm 205 gegenüber dem plattenförmigen Körper 201 axial zur Belagseite hin versetzt ist. Der Arm 205 ist bogenförmig ausgebildet.

Der Dom 202 ist von der Unterseite her (siehe Fig. 9a) hohl mit einem zur Belagseite hervorstehenden rohrförmigen Domabschnitt 202a versehen, welcher von der Unterseite des plattenförmigen Körpers 201 axial hervorsteht. Der Domabschnitt 202a ist koaxial zu dem Dom 202 mit der Mittelachse 200a und von der Innenwand des Doms 202 beabstandet angeordnet.

Der Mitnehmer 20 ist im zusammengebauten Zustand der Übertragungseinheit 16 (Fig. 9b-9c) um die beiden Lager 208, 208a auf die Abtriebshülse 180 verschwenkt, wobei seine Mittelachse 200a und die Mittelachse 180a der Übertragungseinheit 16 fluchten. Hierbei liegt die Unterseite des plattenförmigen Körpers 201 des Mitnehmers 200 auf Abschnitten der Oberseite der Stirnflächenabschnitte 184, 185 der Abtriebshülse 180 auf. Außerdem liegt die Unterseite der Zunge 203 auf dem Stirnflächenabschnitt 183 der Abtriebshülse 180 auf.

Der Domabschnitt 202a befindet sich im zusammengebauten Zustand der Übertragungseinheit 16 innerhalb der kreisförmigen Öffnung 184a der Abtriebshülse 180, wie in Fig. 9c deutlich zu erkennen ist. Der bogenförmige Arm 205 des Mitnehmers 200 ist in dem Schlitz 189 zwischen der Stirnseite 182 und der Unterseite des Deckabschnitts 187 einschließlich des kreisförmigen Endabschnitts 188 der Abtriebshülse 180 eingeführt und aufgenommen. Der bogenförmige Rand des plattenförmigen Körpers 201 des Mitnehmers 200 geht in die bogenförmige Wand 209a des Verbindungsabschnitts 209 und bildet so eine Momentenübertragung zwischen Abtriebshülse 180 und Mitnehmer 200.

Mit dieser Anordnung kann eine Desachsierung zwischen den Mittelachsen 200a und 180a ausgeglichen werden.

Die Übertragungseinheit 16 in dieser Variante kann z.B. ein einstückiges Kunststoffspritzgussteil sein. Natürlich können auch Ausführungen aus einem Elastomer, Metall oder Kombinationen daraus möglich sein, wobei z.B. auch Einlegeteile verwendet werden können.

Die Erfindung wird durch die oben beschriebenen Ausführungsbeispiele nicht eingeschränkt. Sie ist im Rahmen der beigefügten Ansprüche modifizierbar.

Es ist denkbar, dass die Funktionalität einer Ausgleichsmöglichkeit einer Desachsierung, die von dem Mitnehmer 20 bereitgestellt wird, auch in der Abtriebshülse 18 der Übertragungseinheit 16 oder/und im Sensorgetriebe 14b der Sensoreinrichtung 14 integriert ist.

Das Federelement 19 kann auch in die Abtriebshülse 18 oder/und in die Antriebshülse 17 integriert sein.

Es ist weiterhin denkbar, dass ein Querschnitt der Übertragungseinheit 16, der Hülsen 170, 180 und des Federelementes 190 nicht kreisförmig, sondern beispielsweise oval oder mehreckig ausgeführt ist.

### Bezugszeichenliste

- 1: Scheibenbremse
- 2: Bremsscheibe
- 2a: Bremsscheibenachse
- 3: Bremsbelag
- 3a: Bremsbelagträger
- 4: Bremssattel
- 5, 5': Spindeleinheit
- 5a: Nachstellerachse
- 5'a: Mitnehmerachse
- 6, 6': Gewindespindel
- 6a, 6'a: Druckstück
- 7: Brücke
- 7a: Rückstellfeder
- 8: Bremsdrehhebel
- 8a: Hebelarm
- 8b: Hebelschwenkachse
- 9: Verschleißnachstellvorrichtung
- 10: Nachstelleinrichtung
- 11: Mitnehmereinrichtung
- 12: Synchroneinheit
- 12a, 12'a: Synchronrad
- 12b: Synchronmittel
- 13: Nachstellerantrieb
- 13a: Betätiger
- 13b: Nachstellerantriebselement
- 14: Sensoreinrichtung
- 14a: Sensorgehäuse
- 14b: Sensorgetriebe
- 14c: Getriebeeingang
- 14d: Sensorachse
- 15: Sensorantrieb
- 16: Übertragungseinheit
- 17: Antriebshülse
- 17a: Körper
- 17b: Außenprofil
- 17c: Antriebsprofil
- 17d: Flansch
- 17e: Antriebsabschnitt
- 17f: Stirnseite
- 17g: Stirnabschnitt
- 17h: Absatz
- 17i: Schlitz
- 17j: Halteabschnitt
- 18: Abtriebshülse
- 18a: Körper
- 18b: Innenprofil
- 18c: Rand
- 18d: Boden
- 18e: Öffnungsprofil
- 19: Federelement
- 20: Mitnehmer
- 20a: Körper
- 20b: Eingangsabschnitt
- 20c: Ausgangsabschnitt
- 21: Innenprofil
- 21a: Fase
- 112: Synchronradkörper
- 112a: Verzahnung
- 112b: Übertragungsabschnitt
- 112c: Innennut
- 117, 118: Mittelachse
- 170: Antriebshülse
- 171: Körper
- 172: Vorsprung
- 173: Ausnehmung
- 174: Haltearm
- 175: Nase
- 176: Kragenabschnitt
- 180: Abtriebshülse
- 180a: Mittelachse
- 181: Körper
- 182: Stirnseite
- 183, 184, 185: Stirnflächenabschnitt
- 184a: Öffnung
- 186: Lagervorsprung
- 187: Deckabschnitt
- 188: Endabschnitt
- 189: Schlitz
- 190: Federelement
- 191: Federarmhalter
- 192: Federarm
- 193, 193a: Federarmverbinder
- 194: Federarm
- 200: Mitnehmer
- 200a: Mittelachse
- 201: Körper
- 202: Dom
- 202a: Domabschnitt
- 203: Zunge
- 204: Ausgangsabschnitt
- 205: Arm
- 206: Verbindung
- 207: Lagervorsprung
- 208, 208a: Lager
- 209: Verbindungsabschnitt
- 209a: Wand
- 209b: Plattenabschnitt
- 210: Steg
- α: Winkel

## Patentansprüche

1. Sensorvorrichtung zur Erfassung eines Verschleißes von Bremsbelägen (3) und Bremsscheibe (2) einer Scheibenbremse (1), insbesondere für ein Kraftfahrzeug, aufweisend eine Sensoreinrichtung (14) und eine Übertragungseinheit (16), wobei die Sensoreinrichtung (14) mindestens einen Geber und ein mit dem mindestens einen Geber gekoppeltes Sensorgetriebe (14b) mit mindestens einem Getriebeeingang (14c) aufweist, wobei die Übertragungseinheit (16) mit dem Getriebeeingang (14c) gekoppelt ist und zur Übertragung einer Drehbewegung, die dem zu erfassenden Verschleiß zugeordnet ist, für eine Kopplung mit einer Gewindespindel (6') der zuzuordnenden Scheibenbremse (1) ausgebildet ist,
**dadurch gekennzeichnet, dass**
die Übertragungseinheit (16) eine Antriebshülse (17, 170) zur drehfesten Kopplung mit der Gewindespindel (6'), eine mit der Antriebshülse (17, 170) gekoppelte Abtriebshülse (18, 180), mindestens ein Federelement (19; 190) und einen mit der Abtriebshülse (18, 180) drehfest gekoppelten Mitnehmer (20, 200) zur drehfesten Kopplung mit dem Getriebeeingang (14c) umfasst.

2. Sensorvorrichtung nach Anspruch 1, **dadurch gekennzeichnet, dass** die drehfeste Kopplung der Antriebshülse (17, 170) mit der Gewindespindel (6') direkt ausgebildet ist oder indirekt über ein oder mehrere Zwischenbauteile ausgebildet ist.

3. Sensorvorrichtung nach Anspruch 1 oder 2, **dadurch gekennzeichnet, dass** die Abtriebshülse (18) auf der Antriebshülse (17) mit dieser drehfest gekoppelt und relativ zu der Antriebshülse (17) axial verschiebbar angeordnet ist.

4. Sensorvorrichtung nach Anspruch 3, **dadurch gekennzeichnet, dass** die Antriebshülse (17) einen hohlzylindrischen Körper (17a) aufweist, auf dessen Außenfläche ein Außenprofil (17b) als eine Verzahnung einer Wellen-Naben-Verbindung zum Eingriff mit einem mit dem Außenprofil (17b) korrespondierenden Innenprofil (18b) der Abtriebshülse (18) angeordnet ist.

5. Sensorvorrichtung nach Anspruch 4, **dadurch gekennzeichnet, dass** das Außenprofil (17b) der Antriebshülse (17) und das Innenprofil (18b) der Abtriebshülse (18) eine Kerbverzahnung, Zahnwellenverzahnung, Keilwellenverzahnung, oder ein Polygonprofil sind.

6. Sensorvorrichtung nach einem der vorhergehenden Ansprüche, **dadurch gekennzeichnet, dass** ein Endabschnitt der Antriebshülse (17) einen Antriebsabschnitt (17e) mit einem Antriebsprofil (17c) zur direkten Kopplung oder zur indirekten Kopplung über ein oder mehrere Zwischenbauteile mit der Gewindespindel (6') versehen ist, wobei das Antriebsprofil (17c) als eine Verzahnung einer Wellen-Naben-Verbindung ausgebildet und an dem zugehörigen Ende des Endabschnitts von einem Flansch (17d) begrenzt ist.

7. Sensorvorrichtung nach Anspruch 6, **dadurch gekennzeichnet, dass** das Antriebsprofil (17c) der Antriebshülse (17) eine Kerbverzahnung, Zahnwellenverzahnung, Keilwellenverzahnung, oder ein Polygonprofil ist.

8. Sensorvorrichtung nach Anspruch 6 oder 7, **dadurch gekennzeichnet, dass** der Antriebsabschnitt (17e) über einen Absatz (17h) mit dem Körper (17a) der Antriebshülse (17) verbunden ist und einen größeren Außendurchmesser als der Köper (17a) aufweist.

9. Sensorvorrichtung nach Anspruch 8, **dadurch gekennzeichnet, dass** das mindestens eine Federelement (19) zwischen dem Absatz (17h) der Antriebshülse (17) und einem Rand (18c) der Abtriebshülse (18) angeordnet ist.

10. Sensorvorrichtung nach Anspruch 8, **dadurch gekennzeichnet, dass** das mindestens eine Federelement (19) zwischen einer Stirnseite (17f) der Antriebshülse (17) und einem Boden (18d) der Abtriebshülse (18) angeordnet ist.

11. Sensorvorrichtung nach Anspruch 9 oder 10, **dadurch gekennzeichnet, dass** das mindestens eine Federelement (19) als Druckfeder ausgebildet ist.

12. Sensorvorrichtung nach einem der vorhergehenden Ansprüche, **dadurch gekennzeichnet, dass** ein der Antriebshülse (17) abgewandtes Ende der Abtriebshülse (18) ist mit einem Boden (18d) verschlossen, welcher eine Öffnung mit einem Öffnungsprofil (18e) aufweist.

13. Sensorvorrichtung nach Anspruch 12, **dadurch gekennzeichnet, dass** der Mitnehmer (20) einen Körper (20a), der mit einem Eingangsabschnitt (20b) und einem Ausgangsabschnitt (20c) verbunden ist, wobei der Eingangsabschnitt (20b) zur Kopplung mit dem Öffnungsprofil (18e) der Abtriebshülse (18) ein Außenprofil aufweist, das mit dem Öffnungsprofil (18e) korrespondiert, und wobei der Ausgangsabschnitt (20c) zur Kopplung mit dem Getriebeeingang (14c) der Sensoreinrichtung (14) ein Außenprofil aufweist, das mit einem Innenprofil des Getriebeeingangs (14c) korrespondiert.

14. Sensorvorrichtung nach einem der Ansprüche 6 bis 13, **dadurch gekennzeichnet, dass** die Antriebshülse (17) mit mindestens einem sich axial erstreckenden Schlitz (17i) ausgehend von dem Ende, das zur Kopplung mit der Gewindespindel (6') vorgesehen ist, versehen ist, der als eine Ausnehmung in den Körper (17a) der Antriebshülse (17) eingeformt ist.

15. Sensorvorrichtung nach einem der Ansprüche 6 bis 13, **dadurch gekennzeichnet, dass** die Antriebshülse (17) mit mindestens zwei sich axial erstreckenden Schlitzen (17i) ausgehend von dem Ende, das zur Kopplung mit der Gewindespindel (6') vorgesehen ist, versehen ist, die als Ausnehmungen in den Körper (17a) der Antriebshülse (17) eingeformt sind und zwischen sich zwei Halteabschnitte (17j) bilden.

16. Sensorvorrichtung nach einem der vorhergehenden Ansprüche, **dadurch gekennzeichnet, dass** die Antriebshülse (17) und die Abtriebshülse (18) aus einem elastischen und duktilen Material hergestellt sind.

17. Sensorvorrichtung nach Anspruch 1, **dadurch gekennzeichnet, dass** die Abtriebshülse (180) mit der Antriebshülse (170) mittels des Federelementes (190) drehsteif gekoppelt und mittels des Federelementes (190) relativ zu der Antriebshülse (170) axial bewegbar angeordnet ist.

18. Sensorvorrichtung nach Anspruch 17, **dadurch gekennzeichnet, dass** die Abtriebshülse (180) und die Antriebshülse (170) mittels des Federelementes (190) untereinander unter einer axialen Vorspannung einbaubar sind.

19. Sensorvorrichtung nach Anspruch 18, **dadurch gekennzeichnet, dass** das Federelement (190) Federarme (192, 194) und Federarmverbinder (193, 193a) umfasst und über Federarmhalter (191) an jedem Ende des Federelementes (191) jeweils mit der Antriebshülse (170) und der Abtriebshülse (180) verbunden ist.

20. Sensorvorrichtung nach Anspruch 19, **dadurch gekennzeichnet, dass** die Federarme (192, 194), Federarmverbinder (193, 193a) und Federarmhalter (191) des Federelementes (190) Ringe um eine Mittelachse des Federelementes (190) bilden, wobei die Ringe zueinander in einem Abstand in Längsrichtung des Federelementes (190) angeordnet sind.

21. Sensorvorrichtung nach Anspruch 20, **dadurch gekennzeichnet, dass** die Federarmverbinder (193, 193a) und Federarmhalter (191) die Federarme (192, 194) der Ringe tangential untereinander und die Ringe axial verbinden.

22. Sensorvorrichtung nach Anspruch 21, **dadurch gekennzeichnet, dass** der Mitnehmer (200) mit der Abtriebshülse (180) mit einem Verbindungsabschnitt (209) aus einem nicht zusammengebauten Zustand in einen zusammengebauten Zustand verschwenkbar gekoppelt ist.

23. Sensorvorrichtung nach einem der Ansprüche 17 bis 22, **dadurch gekennzeichnet, dass** Antriebshülse (170), die Abtriebshülse (180), das Federelement (190) und der Mitnehmer (200) einstückig hergestellt sind.

24. Scheibenbremse (1), insbesondere für ein Kraftfahrzeug, mit mindestens zwei Spindeleinheiten (5, 5') mit jeweils einer Gewindespindel (6, 6'), einer Zuspannvorrichtung mit einer Spreizmechanik, vorzugsweise mit einem Bremsdrehhebel (8), die mit einer Brücke (7) zusammenwirkt, in welcher die Gewindespindeln (6, 6') eingeschraubt sind, einer Verschleißnachstellvorrichtung (9), welche mindestens eine mechanische Nachstelleinrichtung (10) aufweist, die vorzugsweise um eine Gewindespindel (6) herum mit dieser gekoppelt angeordnet und mit der Spreizmechanik, vorzugsweise mit dem Bremsdrehhebel (8), gekoppelt ist, mit einer Synchroneinheit (12), die Synchronräder (12a, 12'a) und ein die Synchronräder (12a, 12'a) koppelndes Synchronmittel (12b) aufweist, wobei jede Gewindespindel (6, 6') mit jeweils einem der Synchronräder (12a, 12'a) drehfest gekoppelt ist, mit einer Sensorvorrichtung nach einem der vorhergehenden Ansprüche,
**dadurch gekennzeichnet, dass**
das Ende der Antriebshülse (17, 170) der Übertragungseinheit (16) mit der Gewindespindel (6') über das mit der Gewindespindel (6') drehfest gekoppelte Synchronrad (12'a) direkt oder indirekt über ein oder mehrere Zwischenbauteile drehfest verbunden ist.

25. Scheibenbremse (1) nach Anspruch 24, **dadurch gekennzeichnet, dass** das Synchronrad (12'a) einen ringförmigen Übertragungsabschnitt (112b) mit einem an seiner Innenwand angeordneten Abtriebsprofil (21) aufweist, welches mit dem Antriebsprofil (17c) des Endes der Antriebshülse (17) der Übertragungseinheit (16) korrespondiert und in Eingriff steht.

26. Scheibenbremse (1) nach Anspruch 25, **dadurch gekennzeichnet, dass** das Abtriebsprofil (21) des Synchronrads (12'a) und das Antriebsprofil (17c) der Antriebshülse (17) als eine Kerbverzahnung, Zahnwellenverzahnung, Keilwellenverzahnung, oder Polygonprofil ausgebildet sind.

27. Scheibenbremse (1) nach Anspruch 25 oder 26, **dadurch gekennzeichnet, dass** in dem Übertragungsabschnitt (112b) an dessen belagseitigen inneren Ende hinter dem Abtriebsprofil (21) eine Innennut (112c) zur Aufnahme des Flansches (17d) der Antriebshülse (17) der Übertragungseinheit (16) eingeformt ist, wobei ein Innendurchmesser der Innennut (112c) größer ist als ein Innendurchmesser des Übertragungsabschnitts (112b).

28. Scheibenbremse (1) nach Anspruch 27, **dadurch gekennzeichnet, dass** die Innennut (112c) eine größere axiale Länge als der Flansch (17d) der Antriebshülse (17) aufweist.

29. Scheibenbremse (1) nach einem der Ansprüche 24 bis 28, **dadurch gekennzeichnet, dass** die Scheibenbremse (1) druckluftbetätigt ist.

## Claims

1. Sensor system for detecting the wear of brake pads (3) and of the brake disc (2) of a disc brake (1), in particular for a motor vehicle, comprising a sensor device (14) and a transmission unit (16), wherein the sensor device (14) comprises at least one transducer and a sensor gearset (14b) coupled with the at least one transducer, having at least one gearset input (14c), wherein the transmission unit (16) is coupled with the gearset input (14c) and is designed to transmit a rotation movement, associated with the wear to be detected, for a clutch with a threaded spindle (6') of the disc brake (1) to be associated therewith,
**characterised in that**
the transmission unit (16) comprises a drive input sleeve (17, 170) for rotationally fixed coupling to the threaded spindle (6'), a drive output sleeve (18, 180) coupled to the drive input sleeve (17, 170), at least one spring element (19; 190) and a carrier (20, 200) coupled in a rotationally fixed manner to the drive output sleeve (18, 180) for rotationally fixed coupling to the gearset input (14c).

2. Sensor system according to Claim I, **characterised in that** the rotationally fixed coupling of the drive input sleeve (17, 170) to the threaded spindle (6') is direct, or indirect by way of one or more intermediate components.

3. Sensor system according to Claims 1 or 2, **characterised in that** the drive output sleeve (18) is arranged on the drive input sleeve (17), being coupled thereto in a rotationally fixed manner, but can be moved axially relative to the drive input sleeve (17).

4. Sensor system according to Claim 3, **characterised in that** the drive input sleeve (17) has a hollow-cylindrical body (17a) on the outside surface of which is arranged an external profile (17b) in the form of teeth of a shaft-hub connection for engaging with a corresponding internal profile (18b) of the drive output sleeve (18).

5. Sensor system according to Claim 4, **characterised in that** the external profile (17b) of the drive input sleeve (17) and the internal profile (18b) of the drive output sleeve (18) are serration teeth, splineshaft teeth, spline teeth or a polygonal profile.

6. Sensor system according to any of the preceding claims, **characterised in that** an end section of the drive input sleeve (17) is provided with a drive input section (17e) having a drive input profile (17c) for direct coupling to the threaded spindle (6') or for indirect coupling thereto by way of one or more intermediate components, the said drive input profile (17c) being in the form of the teeth of a shaft-hub connection and being delimited by a flange (17d) at the associated end of the said end section.

7. Sensor system according to Claim 6, **characterised in that** the drive input profile (17c) of the drive input sleeve (17) is in the form of serration teeth, splineshaft teeth, spline teeth or a polygonal profile.

8. Sensor system according to Claims 7 or 8, **characterised in that** the drive input section (17e) is connected to the body (17a) of the drive input sleeve (17) by way of a step (17h) and has a larger outer diameter than the body (17a).

9. Sensor system according to Claim 8, **characterised in that** the at least one spring element (19) is arranged between the step (17h) and a rim (18c) of the drive output sleeve (18).

10. Sensor system according to Claim 8, **characterised in that** the at least one spring element (19) is arranged between an end side (17f) of the drive input sleeve (17) and a bottom (18d) of the drive output sleeve (18).

11. Sensor system according to Claims 9 or 10, **characterised in that** the at least one spring element (19) is a compression spring.

12. Sensor system according to any of the preceding claims, **characterised in that** an end of the drive output sleeve (18) facing away from the drive input sleeve (17) is closed by a bottom (18d) which has an opening with an opening profile (18e).

13. Sensor system according to Claim 12, **characterised in that** the carrier (20) has a body (20a) that is connected to an input section (20b) and to an output section (20c), such that the input section (20b) has an external profile for coupling to the opening profile (18e), the said profile corresponding to the opening profile (18e), and such that the output section (20c) has an external profile for coupling to the gearset input (14c) of the sensor device (14), which profile corresponds to an internal profile of the gearset input (14c).

14. Sensor system according to any of Claims 6 to 13, **characterised in that** the drive input sleeve (17) is provided with at least one axially extending slot (17i) starting at the end which is provided for coupling to the threaded spindle (6'), which slot is formed as a recess in the body (17a) of the drive input sleeve (17).

15. Sensor system according to any of Claims 6 to 13, **characterised in that** the drive input sleeve (17) is provided with at least two axially extending slots (17i) starting at the end which is provided for coupling to the threaded spindle (6'), which slots are formed as recesses in the body (17a) of the drive input sleeve (17) and form two holding sections (17j) between them.

16. Sensor system according to any of the preceding claims, **characterised in that** the drive input sleeve (17) and the drive output sleeve (18) are made of an elastic and ductile material.

17. Sensor system according to Claim 1, **characterised in that** the drive output sleeve (180) is coupled to the drive input sleeve (170) by means of the spring element (190) in a rotationally rigid manner and by means of the spring element (190) is arranged axially movably relative to the drive input sleeve (170).

18. Sensor system according to Claim 17, **characterised in that** by virtue of the spring element (190) the drive output sleeve (180) and the drive input sleeve (170) can be fitted with some axial prestress between one another.

19. Sensor system according to Claim 18, **characterised in that** the spring element (190) comprises spring arms (192, 194) and spring arm connectors (193, 193a) and is connected by spring arm holders (191) at each end of the spring element (191) respectively to the drive input sleeve (170) and the drive output sleeve (180).

20. Sensor system according to Claim 19, **characterised in that** the spring arms (192, 194), spring arm connectors (193, 193a) and spring arm holders (191) form rings about a central axis of the spring element (190), the said rings being spaced apart from one another in the longitudinal direction of the spring element (190).

21. Sensor system according to Claim 20, **characterised in that** the spring arm connectors (193, 193a) and spring arm holders (191) connect the spring arms (192, 194) of the rings tangentially to one another and the rings axially.

22. Sensor system according to Claim 21, **characterised in that** the carrier (200) is coupled to the drive output sleeve (180) by way of a connecting section (209), so that it can be pivoted from a non-assembled condition to an assembled condition.

23. Sensor system according to any of Claims 17 to 22, **characterised in that** the drive input sleeve (170), the drive output sleeve (180), the spring element (190) and the carrier (200) are made integrally, in one piece.

24. Disc brake (1), in particular for a motor vehicle, having at least two spindle units (5, 5') each with a threaded spindle (6, 6'), a brake application device with a spreading mechanism, preferably with a brake rotation lever (8) which co-operates with a bridge (7) into which the threaded spindles (6, 6') are screwed, a wear adjustment means (9) comprising at least one mechanical adjusting device (10), which is preferably arranged around a threaded spindle (6) and is coupled thereto, and which is coupled with the spreading mechanism, preferably with the brake rotation lever (8), with a synchronising unit (12) which comprises synchronising wheels (12a, 12'a) and synchronising means (12b) that couple the synchronising wheels (12a, 12'a), wherein each threaded spindle (6, 6') is coupled rotationally fixed to a respective synchronising wheels (12a, 12'a), and with a sensor system according to any of the preceding claims,
**characterised in that**
the end of the drive input sleeve (17, 170) of the transmission unit (16) is coupled to the threaded spindle (6') by way of the synchronising wheel (12'a) coupled in a rotationally fixed manner to the threaded spindle (6'), directly or indirectly by way of one or more intermediate components.

25. Disc brake (1) according to Claim 24, **characterised in that** the synchronising wheel (12'a) has an annular transmission section (112b) with a drive output profile (21) arranged on its inside wall, which corresponds with the drive input profile (17c) of the end of the drive input sleeve (17) of the transmission unit (16) and is engaged therewith.

26. Disc brake (1) according to Claim 25, **characterised in that** the drive output profile (21) of the synchronising wheel (12'a) and the drive input profile (17c) of the drive input sleeve (17) are in the form of serration teeth, splineshaft teeth, spline teeth or a polygonal profile.

27. Disc brake (1) according to Claims 25 or 26, **characterised in that** in the transmission section (112b), at its inner end on the brake lining side behind the drive output profile (21), an internal groove (112c) for receiving the flange (17d) of the drive input sleeve (17) of the transmission unit (16) is formed, such that an inside diameter of the internal groove (112c) is larger than an inside diameter of the transmission section (112b).

28. Disc brake (1) according to Claim 27, **characterised in that** the internal groove (112c) has a longer axial length than the flange (17d) of the drive input sleeve (17).

29. Disc brake (1) according to any of Claims 24 to 28, **characterised in that** the disc brake (1) is actuated by compressed air.

## Revendications

1. Système à capteur de détection d'une usure de garnitures (3) de frein et d'un disque (2) d'un frein (1) à disque, notamment pour un véhicule automobile, comportant un dispositif (14) à capteur et une unité (16) de transformation, le dispositif (14) à capteur ayant au moins un transmetteur et une transmission (14b) à capteur couplée au au moins un transmetteur et au moins une entrée (14c) de transmission, l'unité (16) de transformation étant accouplée à l'entrée (14c) de transmission et étant, pour la transformation d'un mouvement de rotation, qui est associée à l'usure à détecter, constituée pour un accouplement à une broche (6') filetée du frein (1) à disque à associer,
**caractérisé en ce que**
l'unité (16) de transformation comprend un manchon (17, 170) d'entrée pour l'accouplement fixe en rotation avec la broche (6') filetée, un manchon (18, 180) de sortie couplé au manchon (17, 170) d'entrée, au moins un élément (19, 190) à ressort et un entraîneur (20, 200) accouplé de manière fixe en rotation au manchon (18, 180) de sortie, pour l'accouplement fixe en rotation à l'entrée (14c) de transmission.

2. Système à capteur suivant la revendication 1, **caractérisé en ce que** l'accouplement fixe en rotation du manchon (17, 170) d'entrée à la broche (6') filetée est constitué directement ou est constitué indirectement par une ou plusieurs pièces intermédiaires.

3. Système à capteur suivant la revendication 1 ou 2, **caractérisé en ce que** le manchon (18) de sortie est monté sur le manchon (17) d'entrée en en étant solidaire en rotation et en pouvant coulisser axialement par rapport au manchon (17) d'entrée.

4. Système à capteur suivant la revendication 3, **caractérisé en ce que** le manchon (17) d'entrée a un corps (17a) cylindrique creux à la surface extérieure duquel est disposé un profil (17b) extérieur sous la forme d'une denture d'une liaison arbre-moyeu pour la prise avec un profil (18b) intérieur, correspondant au profil (17b) extérieur, du manchon (18) de sortie.

5. Système à capteur suivant la revendication 4, **caractérisé en ce que** le profil (17b) extérieur du manchon (17) d'entrée et le profil (18b) intérieur du manchon (18) de sortie sont un crantage, une denture à cannelure, une denture à rainurage ou un profil polygonal.

6. Système à capteur suivant l'une des revendications précédentes, **caractérisé en ce qu'**une partie d'extrémité du manchon (17) d'entrée est pourvue d'une partie (17e) d'entrée ayant un profil (17c) d'entrée pour l'accouplement direct ou pour l'accouplement indirect par une ou par plusieurs pièces intermédiaires avec la broche (6') filetée, le profil (17c) d'entrée étant constitué sous la forme d'une denture d'une liaison arbre-moyeu et étant limité à l'extrémité associée de la partie d'extrémité par une bride (17d).

7. Système à capteur suivant la revendication 6, **caractérisé en ce que** le profil (17c) d'entrée du manchon (17) d'entrée est un crantage, une denture à cannelure, une denture à rainurage ou un profil polygonal.

8. Système à capteur suivant la revendication 6 ou 7, **caractérisé en ce que** la partie (17e) d'entrée est reliée au corps (17a) du manchon (17) d'entrée par un ressaut (17h).

9. Système à capteur suivant la revendication 8, **caractérisé en ce que** le au moins un élément (19) à ressort est disposé entre le ressaut (17h) du manchon (17) d'entrée et un bord (18c) du manchon (18) de sortie.

10. Système à capteur suivant la revendication 8, **caractérisé en ce que** le au moins un élément (19) à ressort est disposé entre un côté (17f) frontal du manchon (17) d'entrée et un fond (18d) du manchon (18) de sortie.

11. Système à capteur suivant la revendication 9 ou 10, **caractérisé en ce que** le au moins un élément (19) à ressort est constitué sous la forme d'un ressort de compression.

12. Système à capteur suivant l'une des revendications précédentes, **caractérisé en ce qu'**une extrémité, éloignée du manchon (17) d'entrée, du manchon (18) de sortie, est fermée par un fond (18d), qui a une ouverture ayant un profil (18e) d'ouverture.

13. Système à capteur suivant la revendication 12, **caractérisé en ce que** l'entraîneur (20) a un corps (20a), qui est relié à une partie (20b) d'entrée et à une partie (20c) de sortie, la partie (20b) d'entrée ayant, pour l'accouplement au profil (18e) d'ouverture du manchon (18) de sortie, un profil extérieur, qui correspond au profil (18e) d'ouverture, et la partie (20c) de sortie ayant, pour l'accouplement à l'entrée (14c) de transmission du dispositif (14) à capteur, un profil extérieur, qui correspond à un profil intérieur de l'entrée (14c) de transmission.

14. Système à capteur suivant l'une des revendications 6 à 13, **caractérisé en ce que** le manchon (17) d'entrée est pourvu d'au moins une fente (17i) s'étendant axialement à partir de l'extrémité prévue pour l'accouplement avec la broche (6') filetée, fente qui est formée sous la forme d'un évidement dans le corps (17a) du manchon (17) d'entrée.

15. Système à capteur suivant l'une des revendications 6 à 13, **caractérisé en ce que** le manchon (17) d'entrée est pourvu d'au moins deux fentes (17i) s'étendant axialement à partir de l'extrémité qui est prévue pour l'accouplement avec la broche (6') filetée, fentes qui sont formées sous la forme d'évidements dans le corps (17a) du manchon (17) d'entrée et qui forment entre elles deux parties (17) de maintien.

16. Système à capteur suivant l'une des revendications précédentes, **caractérisé en ce que** le manchon (17) d'entrée et le manchon (18) de sortie sont en un matériau élastique et ductile.

17. Système à capteur suivant la revendication 1, **caractérisé en ce que** le manchon (180) d'entrée est solidaire en rotation du manchon (170) d'entrée, au moyen de l'élément (190) à ressort, et est, au moyen de l'élément (190) à ressort, monté mobile axialement par rapport au manchon (170) d'entrée.

18. Système à capteur suivant la revendication 17, **caractérisé en ce que** le manchon (180) d'entrée et le manchon (170) de sortie peuvent être, au moyen de l'élément (190) à ressort, montés l'un en dessous de l'autre avec une précontrainte axiale.

19. Système à capteur suivant la revendication 18, **caractérisé en ce que** l'élément (190) à ressort comprend des bras (192, 194) de ressort et des raccords (193, 193a) de bras de ressort et est relié par un porte-bras de ressort (191) à chaque extrémité de l'élément (191) à ressort, respectivement au manchon (170) d'entrée et au manchon (180) de sortie.

20. Système à capteur suivant la revendication 19, **caractérisé en ce que** les bras (192, 194) de ressort, les raccords (193, 193a) de ressort et les porte-bras de ressort (191) de l'élément (190) à ressort forment des anneaux autour d'un axe médian de l'élément (190) à ressort, les anneaux étant disposés les uns par rapport aux autres à distance dans la direction longitudinale de l'élément (190) à ressort.

21. Système à capteur suivant la revendication 20, **caractérisé en ce que** les raccords (193, 193a) de bras de ressort et les porte-bras de ressort (191) des bras (192, 194) de ressort relient les anneaux tangentiellement entre eux et les anneaux axialement.

22. Système à capteur suivant la revendication 21, **caractérisé en ce que** l'entraîneur (200) est accouplé au manchon (180) de sortie par une partie (209) de liaison, de manière à pouvoir pivoter d'un état non monté à un état monté.

23. Système à capteur suivant l'une des revendications 17 à 22, **caractérisé en ce que** le manchon (170) d'entrée, le manchon (180) de sortie, l'élément (190) à ressort et l'entraîneur (200) sont fabriqués en une seule pièce.

24. Frein (1) à disque, notamment pour un véhicule automobile ayant au moins deux unités (5, 5') à broche, ayant chacune une broche (6, 6') filetée, un dispositif de serrage ayant un mécanisme d'écartement, ayant de préférence un levier (8) tournant de frein, qui coopère avec un pontet (7) dans lequel les broches (6, 6') filetées sont vissées, un dispositif (9) de rattrapage d'usure, qui a au moins un dispositif (10) de rattrapage mécanique, qui est disposé de préférence autour d'une broche (6) filetée en y étant couplé et qui est couplé au mécanisme d'écartement, de préférence par le levier (8) tournant de frein, comprenant une unité (12) synchrone, qui a des roues (12a, 12'a) synchrones et un moyen (12b) de synchronisation accouplant les roues (12a, 12'a) synchrones, chaque broche (6, 6') filetée étant solidaire en rotation de respectivement l'une des roues (12a, 12'a) synchrones, comprenant un système à
capteur suivant l'une des revendications précédentes, **caractérisé en ce que**
l'extrémité du manchon (17, 170) d'entrée de l'unité (16) de transformation est solidaire en rotation de la broche (6') filetée, directement ou indirectement par une ou par plusieurs pièces intermédiaires, par la roue (12'a) synchrone solidaire en rotation de la broche (6') filetée.

25. Frein (1) à disque suivant la revendication 24, **caractérisé en ce que** la roue (12'a) synchrone a une partie (112b) annulaire de transformation, ayant un profil (21) de sortie sur sa paroi intérieure, lequel profil correspond au profil (17c) d'entrée de l'extrémité du manchon (17) d'entrée de l'unité (16) de transformation et est en prise avec lui.

26. Frein (1) à disque suivant la revendication 25, **caractérisé en ce que** le profil (21) de sortie de la roue (12'a) synchrone et le profil (17c) d'entrée du manchon (17) d'entrée sont constitués sous la forme d'un crantage, une denture à cannelure, une denture à rainurage ou un profil polygonal.

27. Frein (1) à disque suivant la revendication 25 ou 26, **caractérisé en ce que**, dans la partie (112b) de transformation, à son extrémité intérieure du côté de la garniture, est formée derrière le profil (21) de sortie une rainure (112c) intérieure de réception de la bride (17d) du manchon (17) d'entrée de l'unité (16) de transformation, un diamètre intérieur de la rainure (112c) intérieure étant plus grand qu'un diamètre intérieur de la partie (112b) de transformation.

28. Frein (1) à disque suivant la revendication 27, **caractérisé en ce que** la rainure (112c) intérieure a une longueur axiale plus grande que la bride (17d) du manchon (17) d'entrée.

29. Frein (1) à disque suivant l'une des revendications 24 à 28, **caractérisé en ce que** le frein (1) à disque est à actionnement par de l'air comprimé.
